# EUROPEAN PATENT SPECIFICATION

(11) **EP 4 019 187 B1**
(45) Date of publication and mention of the grant of the patent: **12.07.2023**
(21) Application number: 21216936.1
(22) Date of filing: 22.12.2021
(51) Int. Cl.: B23Q 7/10, A61C 13/00, B08B 5/00, B23Q 7/14, B23Q 11/00, B23Q 11/08

(54) **CUTTING MACHINE WITH A CLEANING CHAMBER**
SCHNEIDEMASCHINE MIT WÄSCHERAUM
DÉCOUPEUSE AVEC CHAMBRE DE NETTOYAGE

(30) Priority: 25.12.2020 JP 2020216225
(43) Date of publication of application: 29.06.2022
(73) Proprietor: DGSHAPE Corporation, Hamamatsu-shi, Shizuoka 431-2103 (JP)
(72) Inventor: Dodo, Shinpei, Hamamatsu-shi (JP)
(74) Representative: Grünecker Patent- und Rechtsanwälte PartG mbB

(56) References cited:
- EP-A1- 3 332 906
- WO-A1-85/03660
- JP-A- S6 389 249

## Description

### BACKGROUND OF THE INVENTION

### 1. Field of the Invention

The present invention relates to a cutting machine.

### 2. Description of the Related Art

A known cutting machine produces, for example, a dental shaped product by cutting a cutting object. In some cutting machines, holders for holding adaptors retaining cutting objects are provided in processing chambers, and the retained cutting objects are cut with the adaptors. JP2018-124862A, for example, discloses a cutting machine in which a holder to hold an adaptor retaining a cutting object is provided in a processing chamber and the retained cutting object is cut with the adaptor.

Cutting powder generated by cutting of a cutting object adheres to an adaptor as described above. Thus, the adaptor needs to be cleaned. JP2013-121466A, for example, discloses a cutting machine including an air blower for blowing air to a cutting portion of the cutting object. With this air blower, air is blown to an adaptor held in a processing chamber and a cutting object retained by the adaptor to thereby enable cleaning of the adaptor and the cutting object.

In the conventional cutting machines described above, a cleaning time for the adaptors is included in the time for a cutting process, and thus, the time for the cutting process is increased.

JP S63 89249 A discloses a cutting machine comprising: a processing chamber provided with a cutting device to cut a cutting object retained by an adaptor (pallet), a cleaning chamber provided with a cleaning device to clean the adaptor, said cleaning chamber being also an accommodation chamber, and a conveyor to convey the adaptor to the processing chamber and the cleaning chamber.

### SUMMARY OF THE INVENTION

Preferred embodiments of the present invention provide cutting machines each capable of cleaning an adaptor of a cutting object and reducing the time for a cutting process.

A cutting machine according to the present invention includes a processing chamber provided with a cutting device to cut a cutting object retained by an adaptor, a cleaning chamber provided with a cleaning device to clean the adaptor, and a conveyor to convey the adaptor to the processing chamber and the cleaning chamber.

In a cutting machine according to the present invention, the cleaning chamber to clean the adaptor is separate from the processing chamber, and the conveyor to convey the adaptor from the processing chamber to the cleaning chamber is provided. Thus, a next cutting object can be processed without waiting for the adaptor to be cleaned. Accordingly, the time for a cutting process of a cutting object can be reduced.

### BRIEF DESCRIPTION OF THE DRAWINGS

FIG. 1 is a perspective view of a cutting machine according to a preferred embodiment of the present invention.
FIG. 2 is a plan view of a cutting object and an adaptor.
FIG. 3 is a perspective view illustrating the cutting machine in a state where a case and other members are detached.
FIG. 4 is a perspective view of a cleaning chamber.
FIG. 5 is a plan view of the cleaning chamber.
FIG. 6 is a longitudinal cross-sectional view of the cleaning chamber when seen from the rear.
FIG. 7 is a plan view illustrating the cleaning chamber in a state where a shutter is closed to the most.
FIG. 8 is a perspective view of an adaptor moving device when seen from internal space of a housing.
FIG. 9 is a plan view illustrating the cleaning chamber while a first pivot arm and a second pivot arm are pivoting.
FIG. 10 is a system diagram showing emission of air in the housing and supply of compressed air.
FIG. 11 is a block diagram of the cutting machine.
FIG. 12A is a first half of a flowchart depicting a process from cutting of a cutting object to cleaning in the cleaning chamber.
FIG. 12B is a second half of the flowchart depicting the process from cutting of the cutting object to cleaning in the cleaning chamber.
FIG. 13 is a perspective view illustrating a retainer and a door while the retainer is at a transfer position.

### DETAILED DESCRIPTION OF THE PREFERRED EMBODIMENTS

Cutting machines according to preferred embodiments of the present invention will be described with reference to the drawings. The preferred embodiments described herein are not intended to limit the present invention. Elements and features having the same functions are denoted by the same reference numerals, and description for the same elements and features will not be repeated or will be simplified as appropriate.

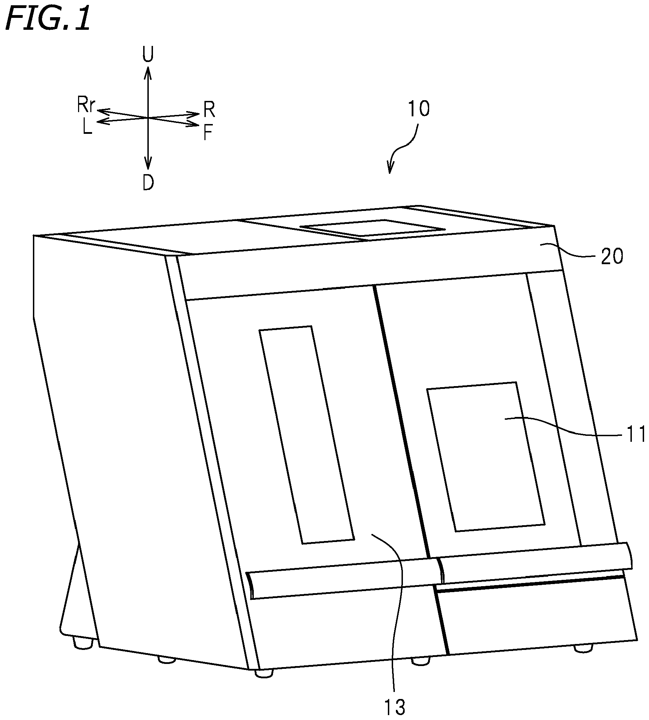

FIG. 1 is a perspective view of a cutting machine 10 according to a preferred embodiment of the present invention. In the following description, when the cutting machine 10 is seen from the front, the direction away from the cutting machine 10 will be referred to as forward, and the direction toward the cutting machine 10 will be referred to as rearward. Left, right, up, and down refer to left, right, up, and down, respectively, when the cutting machine 10 is seen from the front. Characters F, Rr, L, R, U, and D in the drawings represent front, rear, left, right, up, and down, respectively.

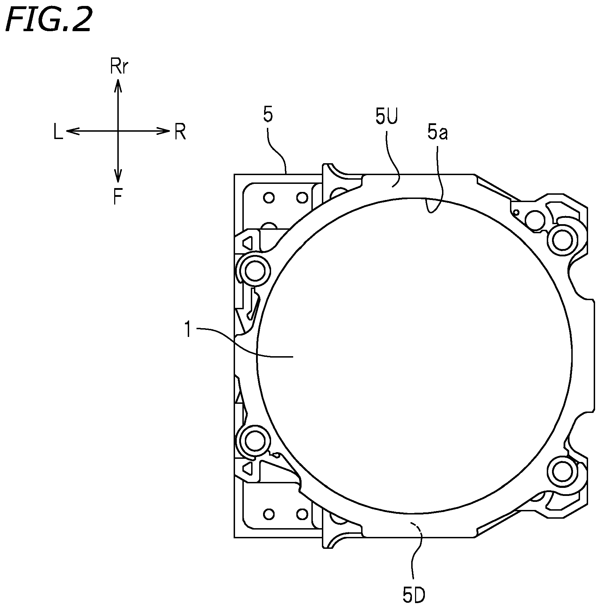

The cutting machine 10 according to this preferred embodiment is a cutting machine for cutting a disc-shaped cutting object retained by an adaptor. FIG. 2 is a plan view of a cutting object 1 and an adaptor 5. The cutting machine 10 herein is a machine for cutting the cutting object 1 to produce dental shaped products including crown prosthetics, such as a crown, a bridge, a coping, an inlay, an onlay, a veneer, and a custom abutment, artificial teeth, a denture base, and so forth.

The cutting object 1 is made of, for example, a resin such as PMMA, PEEK, a glass fiber reinforced resin, or a hybrid resin, a ceramic material such as glass ceramic or zirconia, a metal material such as a cobalt-chrome sintered metal, wax, gypsum, or the like. In the case of using zirconia as a material for the cutting object 1, semi-sintered zirconia is used, for example. The cutting object 1 has a disc (circular plate) shape in this preferred embodiment. The cutting object 1 may have any other shapes, such as a block shape (e.g., a cube or a rectangular parallelepiped).

The adaptor 5 retains the disc-shaped cutting object 1. The adaptor 5 herein is a flat-plate adaptor having an insertion hole 5a formed in a center portion of the adaptor 5. The insertion hole 5a has a circular or substantially circular shape corresponding to the cutting object 1. The cutting object 1 is inserted in the insertion hole 5a to be retained by the adaptor 5. The cutting object 1 is accommodated in the cutting machine 10 and processed while being retained by the adaptor 5.

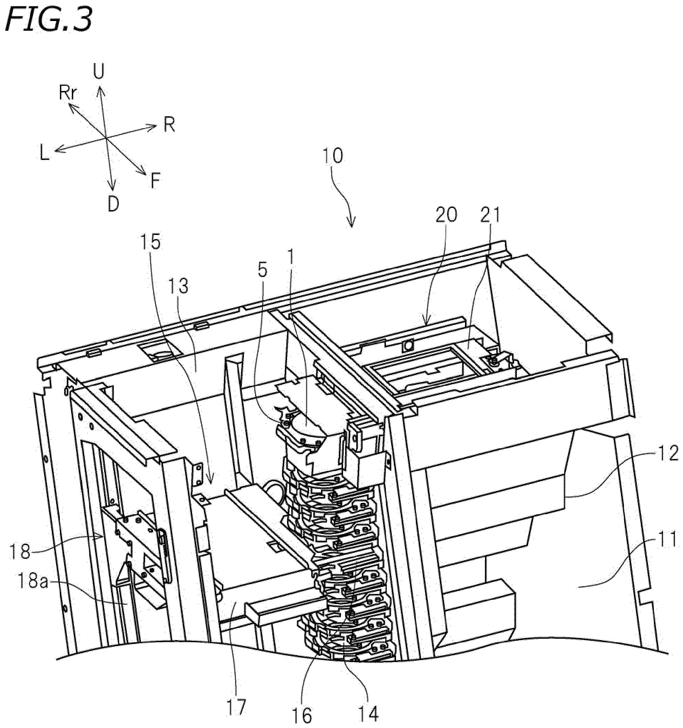

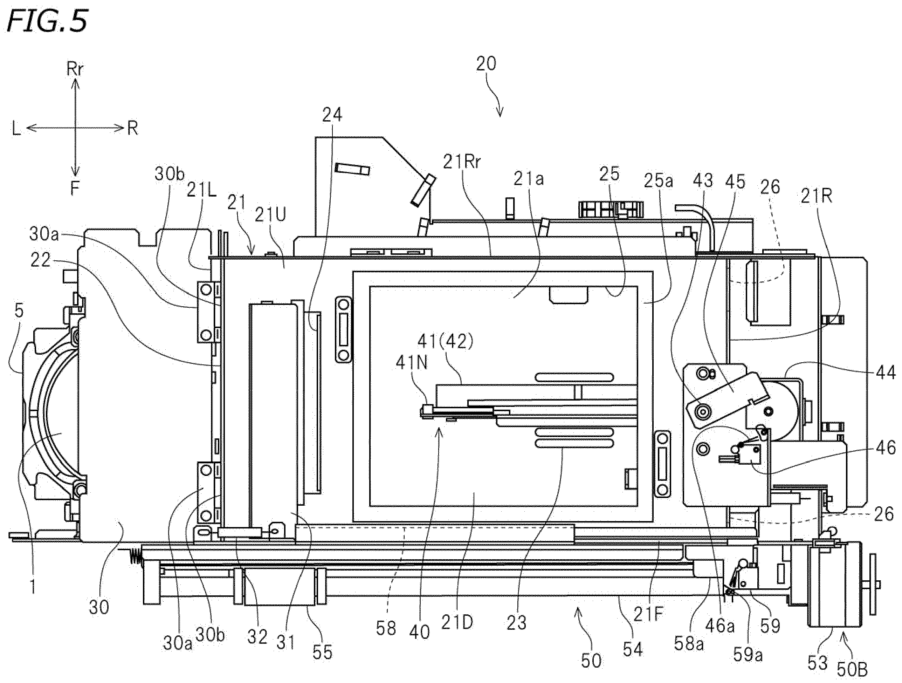

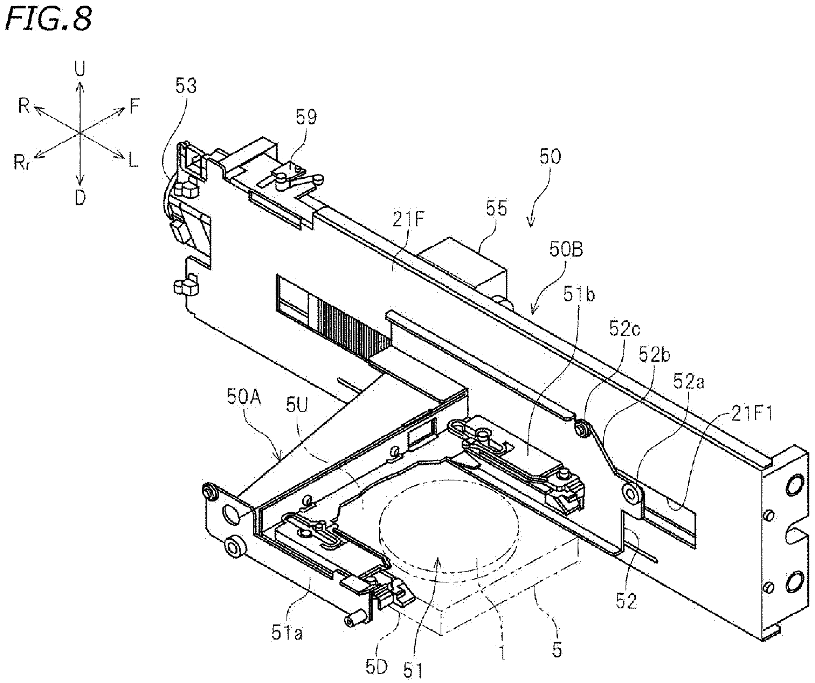

As illustrated in FIG. 1, the cutting machine 10 has a box shape. FIG. 3 is a perspective view illustrating the cutting machine 10 in a state where parts such as a case and a front cover are detached. As illustrated in FIG. 3, the cutting machine 10 includes a processing chamber 11, an accommodation chamber 13, and a cleaning chamber 20. The processing chamber 11 is a space where the cutting object 1 is subjected to a cutting process. The processing chamber 11 is provided with a cutting device 12 for cutting the cutting object 1 retained by the adaptor 5. The accommodation chamber 13 is configured to accommodate a plurality of adaptors 5. The accommodation chamber 13 is a space for accommodating the plurality of cutting objects 1 retained by the adaptor 5 in order to continuously process the plurality of cutting objects 1. Although specifically described later, a cutting object 1 to be subjected to a cutting process is conveyed from the accommodation chamber 13 to the processing chamber 11, and after the cutting process, is returned to the accommodation chamber 13 by way of the cleaning chamber 20. As illustrated in FIG. 3, the cutting machine 10 includes a conveyor 15 for conveying the adaptor 5 to the processing chamber 11, the cleaning chamber 20, and the accommodation chamber 13. The cleaning chamber 20 is provided with a cleaning device 40 (see FIG. 5) for cleaning the adaptor 5 retaining the cutting object 1 after the cutting process, and an adaptor moving device 50 (see FIG. 8) that moves the adaptor 5 in the left-right directions.

As the cutting device 12, various known cutting devices for cutting disc-shaped cutting objects can be preferably used. Although not specifically illustrated and described, the cutting device 12 may include, for example, a holder to hold the adaptor 5 retaining the cutting object 1, a rotation device to turn the orientation of the cutting object 1 by rotating the holder, a stocker for a cutting tool, a spindle to hold and rotate the cutting tool, and a moving device to move at least one of the rotation device or the spindle in the left-right directions, front-rear directions, and top-bottom directions. The cutting device 12 is not limited to a specific configuration.

As illustrated in FIG. 3, the accommodation chamber 13 is disposed at a side of the processing chamber 11, and in this preferred embodiment, at the left of the processing chamber 11. The accommodation chamber 13 extends in the top-bottom directions. The accommodation chamber 13 is provided with a plurality of adaptor containers 14 to accommodate the adaptors 5. The plurality of adaptor containers 14 extend in the top-bottom direction along the right wall of the accommodation chamber 13. The plurality of adaptor containers 14 include shelves extending in the top-bottom direction. Each of the adaptor containers 14 is configured such that the adaptor 5 supported horizontally or substantially horizontally can be placed on the adaptor container 14.

The accommodation chamber 13 is provided with the conveyor 15. The conveyor 15 is disposed at the left of the plurality of adaptor containers 14. The conveyor 15 includes a clamp 16, a clamp accommodation part 17, and a lifting mechanism 18. The clamp 16 has a claw shape and is capable of holding the adaptor 5. The clamp 16 extends horizontally. The clamp accommodation part 17 is disposed at the left of the adaptor containers 14, and is configured to move upward and downward by driving of the lifting mechanism 18. The clamp accommodation part 17 has a box shape capable of accommodating the clamp 16. While the clamp accommodation part 17 moves upward and downward, the clamp 16 is accommodated in the clamp accommodation part 17. When the clamp accommodation part 17 stops at a side of one of the adaptor containers 14 and transfers the adaptor 5 to or from this adaptor container 14, the clamp 16 moves rightward from the inside of the clamp accommodation part 17. Accordingly, the clamp 16 enters the adaptor container 14. The clamp accommodation part 17 includes an unillustrated driver for the clamp 16. The lifting mechanism 18 in this preferred embodiment includes a guide rail 18a extending upward and downward, an unillustrated ball screw, and an unillustrated motor for rotating the ball screw. The conveyor 15 is not limited to a specific configuration.

The conveyor 15 is configured to move the clamp accommodation part 17 to a position below the plurality of adaptor containers 14. The conveyor 15 transfers the adaptor 5 to and from the holder of the cutting device 12 located below the adaptor containers 14. The conveyor 15 is capable of moving the clamp accommodation part 17 to a position above the plurality of adaptor containers 14. The conveyor 15 transfers the adaptor 5 to and from a retainer 50A (see FIG. 8) of the adaptor moving device 50 located above the adaptor containers 14.

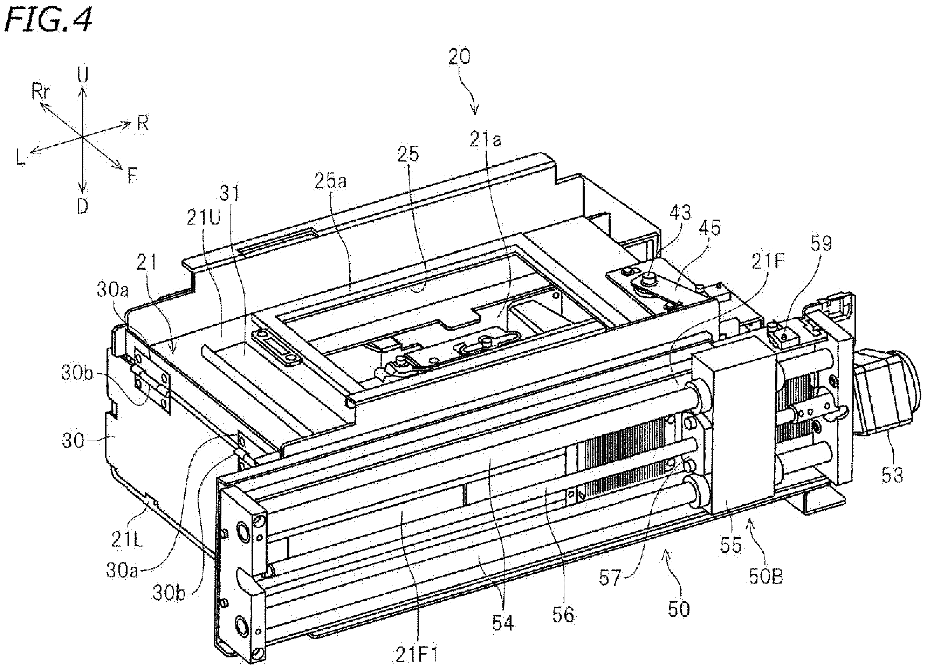

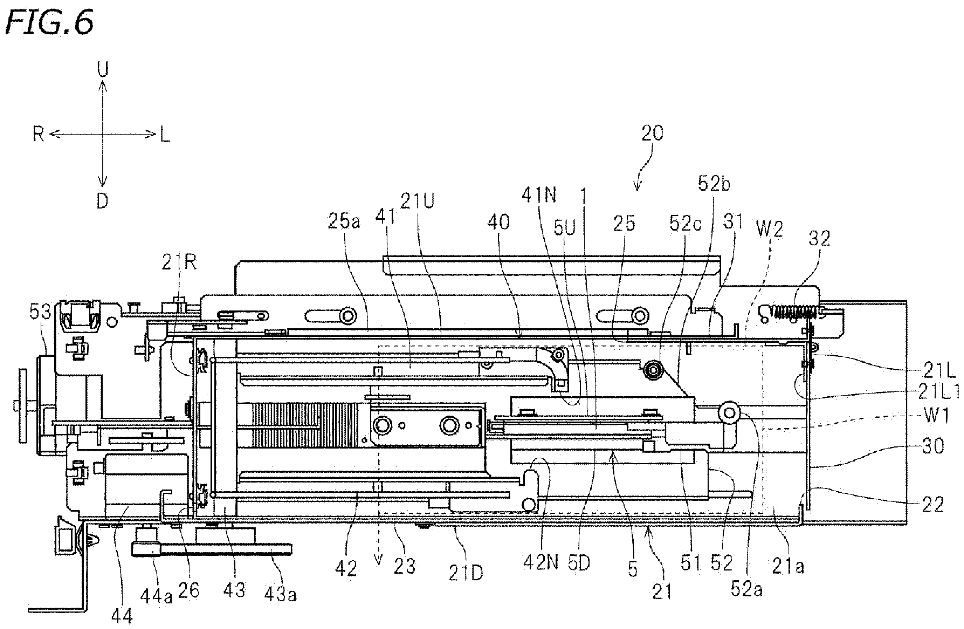

As illustrated in FIG. 3, the cleaning chamber 20 is disposed above the processing chamber 11. The cleaning chamber 20 is located at the right of the accommodation chamber 13. FIG. 4 is a perspective view of the cleaning chamber 20. The cleaning chamber 20 can be detached from the cutting machine 10 as a unit as illustrated in FIG. 4. FIG. 5 is a plan view of the cleaning chamber 20. FIG. 6 is a longitudinal cross-sectional view of the cleaning chamber 20 when seen from the rear. As illustrated in FIGS. 4 through 6, the outer shape of the cleaning chamber 20 is defined by a box-shaped housing 21. The housing 21 has a rectangular or substantially rectangular parallelepiped shape, and includes an upper wall 21U, a lower wall 21D, a front wall 21F, a rear wall 21Rr, a left wall 21L, and a right wall 21R. The upper wall 21U extends in the left-right directions and in the front-rear directions. The lower wall 21D is opposed to the upper wall 21U below the upper wall 21U. The lower wall 21D also extends in the left-right directions and in the front-rear directions. The front wall 21F is connected to the front end of the upper wall 21U and the front end of the lower wall 21D. The front wall 21F extends in the left-right directions and in the top-bottom directions. The rear wall 21Rr is connected to the rear end of the upper wall 21U and the rear end of the lower wall 21D. The rear wall 21Rr extends in the left-right directions and in the top-bottom directions. The front wall 21F is opposed to the rear wall 21Rr. The left wall 21L is connected to the left end of each of the upper wall 21U, the lower wall 21D, the front wall 21F, and the rear wall 21Rr, and extends in the front-rear directions and in the top-bottom directions. The right wall 21R is connected to the right end of each of the upper wall 21U, the lower wall 21D, the front wall 21F, and the rear wall 21Rr, and extends in the front-rear directions and in the top-bottom directions. The left wall 21L is opposed to the right wall 21R. These walls 21U, 21D, 21F, 21Rr, 21L, and 21R of the housing 21 form internal space 21a of the housing 21. The cleaning device 40 is accommodated in the internal space 21a of the housing 21.

As illustrated in FIG. 6, an entrance 22 for the adaptor 5 is formed in the left wall 21L of the housing 21. The entrance 22 is open in the left-right directions, and extends in the front-rear directions and in the top-bottom directions. The adaptor 5 is moved in the opening directions of the entrance 22 (i.e., in the directions in which the entrance 22 faces, that is, in the left-right directions in this preferred embodiment) to move in or out of the housing 21. The adaptor 5 is moved in the left-right directions by the adaptor moving device 50 described later. The entire left end surface of the wall of the housing 21 may be open as the entrance 22 for the adaptor 5. In this case, the housing 21 may have substantially no left wall 21L.

As illustrated in FIG. 4, the entrance 22 is provided with a door 30. The door 30 is configured to pivot in the left-right directions by hinges 30a connected to the upper end of the door 30. The hinges 30a include pivot shafts 30b extending in the front-rear directions. The door 30 is opened and closed by pivoting about the pivot shafts 30b in the left-right directions. As illustrated in FIG. 6, a stopper 21L1 is provided at the right of the door 30, that is, at the side toward the internal space 21a of the housing 21. The stopper 21L1 restricts a pivot of the door 30. The stopper 21L1 restricts entering of the door 30 into the housing 21. In other words, the door 30 is pivotable outside the housing 21. FIGS. 4 and 6 illustrate the cleaning chamber 20 with the door 30 closed. FIG. 5 illustrates the cleaning chamber 20 with the door 30 open.

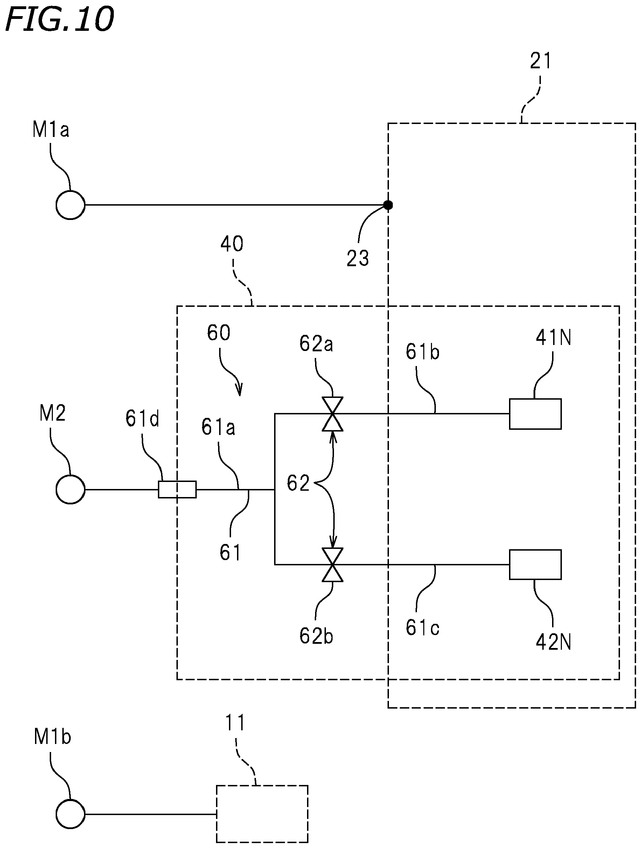

An outlet 23 to which an exhaust device M1a (see FIG. 10) is connected is formed in the lower wall 21D. The exhaust device M1a in this preferred embodiment is a dust collector to collect cutting powder generated by a cutting process of the cutting object 1. The outlet 23 is open at the lower wall 21D to intersect with the opening directions (the left-right directions in this preferred embodiment) of the entrance 22. The outlet 23 is open in the top-bottom directions in this preferred embodiment. As illustrated in FIG. 5, the outlet 23 includes a plurality of slit through holes. With respect to the left-right directions, the outlet 23 is located at the right of the left end (an end toward the entrance 22) of the cleaning device 40. In other words, the outlet 23 is farther from the entrance 22 than the end of the cleaning device 40 toward the entrance 22. In this preferred embodiment, the outlet 23 is provided immediately under the cleaning device 40.

A first inlet 24 is formed in the upper wall 21U to face the outlet 23 when seen in the opening directions of the entrance 22 (in the left-right directions in this preferred embodiment). The first inlet 24 is open in the top-bottom directions. The first inlet 24 and second inlets 26 described later are openings for generating an air flow toward the outlet 23 in the internal space 21a of the housing 21. The first inlet 24 and the second inlets 26 are openings for preventing the internal space 21a of the housing 21 from being under a significantly negative pressure. As illustrated in FIG. 5, the first inlet 24 is disposed at the right of the entrance 22 and at the left of the cleaning device 40 in plan view. In other words, the first inlet 24 is located closer to the entrance 22 than the cleaning device 40 in the opening directions of the entrance 22 (in the left-right directions in this preferred embodiment). The first inlet 24 has a rectangular or substantially rectangular shape in plan view. In this preferred embodiment, the first inlet 24 is a flat rectangle that is long in the front-rear directions and short in the left-right directions.

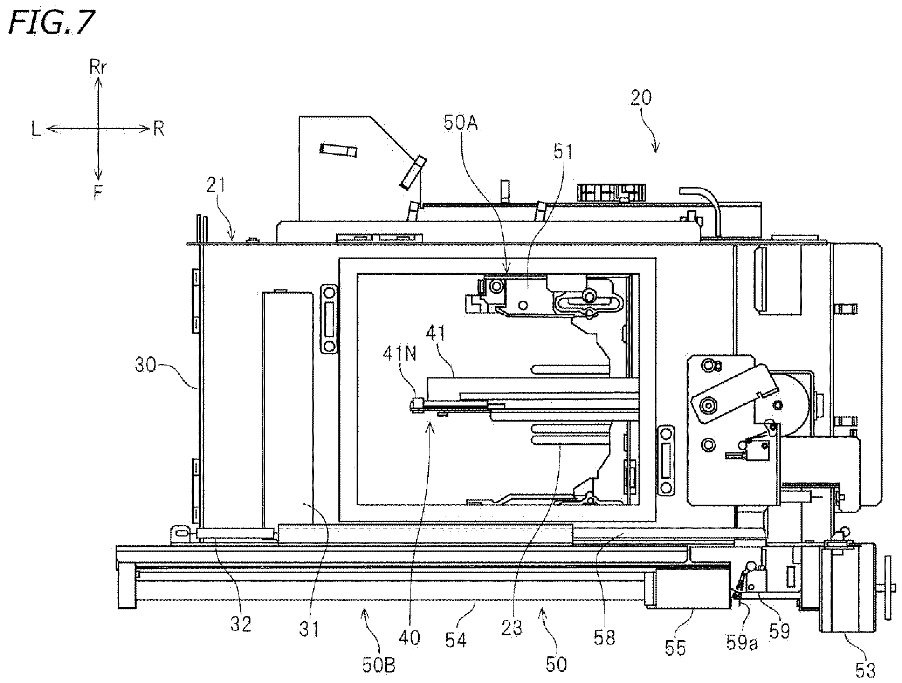

As illustrated in FIG. 5, the first inlet 24 is provided with a shutter 31. The opening area of the first inlet 24 increases or decreases by opening or closing the shutter 31. The shutter 31 has a flat plate shape extending in the left-right directions and in the front-rear directions. The shutter 31 is movable in the left-right directions. The shutter 31 is coupled to a coupling member 58, and moves rightward when the coupling member 58 is pushed rightward. This rightward movement of the shutter 31 reduces the opening area of the first inlet 24. FIG. 7 is a plan view illustrating the cleaning chamber 20 in a state where the shutter 31 is closed to the most. As illustrated in FIG. 7, the shutter 31 closed to the most fully closes the first inlet 24. A device to push the coupling member 58 rightward is the adaptor moving device 50 to move the adaptor 5 in the left-right directions in this preferred embodiment. That is, the shutter opening/closing device to change the opening area of the first inlet 24 by opening and closing the shutter 31 is shared by the adaptor moving device 50. When there is no force of pushing the coupling member 58 rightward any more, the shutter 31 moves leftward by a restoring force of a spring 32 connected to the left edge.

The upper wall 21U further has a work window 25. The work window 25 is open in the top-bottom directions. The work window 25 is an opening for allowing a user to perform a work in the housing 21 (e.g., a work of collecting the adaptor 5 dropped in the housing because of improper mounting). A gasket 25a to close the work window 25 is provided around the work window 25. Although not shown, an unillustrated lid is placed over the housing 21 in normal use. When the gasket 25a is crushed by the unillustrated lid so that the work window 25 is closed in normal use.

As illustrated in FIGS. 5 and 6, the right wall 21R has a pair of second inlets 26 located in a front portion and a rear portion of the right wall 21R. Each of the second inlets 26 is open in the left-right directions. In this preferred embodiment, the second inlets 26 are disposed at the opposite side to the first inlet 24 with respect to the outlet 23. The outlet 23 is disposed between the first inlet 24 and the second inlets 26. As illustrated in FIG. 6, the second inlets 26 are disposed below the cleaning device 40. The positions of the second inlets 26 are not limited. In contrast, the first inlet 24 is disposed above the cleaning device 40. The second inlets 26 are preferably disposed to face a portion in the internal space 21a of the housing 21 where an air flow is less likely to occur in an airflow from the first inlet 24 and the outlet 23. In this preferred embodiment, the second inlets 26 are flat slit through holes that are long in the front-rear directions and short in the top-bottom directions. The opening area of each of the second inlets 26 is smaller than the opening area of the first inlet 24 in the state where the shutter 31 is fully open. In this preferred embodiment, the total opening area of the plurality of second inlets 26 is smaller than the opening area of the first inlet 24 in the state where the shutter 31 is fully open. The second inlets 26 are not limited to a specific shape and a specific size.

The adaptor moving device 50 transfers the adaptor 5 to and from the conveyor 15, and changes the position of the adaptor 5 in the cleaning chamber 20 during cleaning of the adaptor 5. The adaptor moving device 50 in this preferred embodiment moves the adaptor 5 in the left-right directions inside and outside the cleaning chamber 20. In addition, the adaptor moving device 50 is also the driver to open and close the shutter 31 as described above. FIG. 8 is a perspective view of the adaptor moving device 50 when seen from the internal space 21a of the housing 21. As illustrated in FIGS. 4 and 8, the adaptor moving device 50 includes the retainer 50A to retain the adaptor 5, and a driver 50B to move the retainer 50A in the left-right directions.

As illustrated in FIG. 8, the retainer 50A includes a mounting part 51 and a support plate 52. The mounting part 51 has a U shape that is open to the left. The mounting part 51 includes a first retention arm 51a and a second retention arm 51b each extending leftward from the root of the U shape. The second retention arm 51b is located forward of the first retention arm 51a. As indicated by chain double-dashed lines in FIG. 8, the adaptor 5 is attached between the first retention arm 51a and the second retention arm 51b. The adaptor 5 is retained in a horizontal or substantially horizontal orientation by the retainer 50A. In the following description, as illustrated in FIGS. 8 and 6, for example, the surface of the adaptor 5 facing upward while the adaptor 5 is retained by the retainer 50A will be referred to as an upper surface 5U, and the surface facing downward will be referred to as a lower surface 5D. However, such distinction is made for convenience, and the upper surface 5U and the lower surface 5D of the adaptor 5 as an object may be the same.

As illustrated in FIG. 8, the support plate 52 extends in the left-right directions and in the top-bottom directions. The support plate 52 extends along the surface (rear surface) of the front wall 21F of the housing 21 toward the internal space 21a. The support plate 52 is coupled to the driver 50B, and supports the mounting part 51. The support plate 52 projects to the left of the mounting part 51, that is, toward the accommodation chamber 13. The left end of the support plate 52 is provided with a first washer 52a. A portion of the front end of the support plate 52 above the first washer 52a includes a chamfer 52b. A second washer 52c is provided at the top of the chamfer 52b. The first washer 52a and the second washer 52c are brought into contact with the door 30 when the support plate 52 is moved by the driver 50B to push and open the door 30. To avoid damage on the door 30, each of the first washer 52a and the second washer 52c is made of a soft material, for example, a resin such as POM. The support plate 52 also has the function of reducing or preventing the scattering of dust by cleaning toward the driver 50B.

As illustrated in FIG. 4, the driver 50B includes a driving motor 53, a pair of guide shafts 54, a slide block 55, a ball screw 56, and a nut 57. The pair of guide shafts 54 is disposed side by side in the top-bottom directions, and extends in the left-right directions. The slide block 55 is engaged with the pair of guide shafts 54 to be slidable in the left-right directions. The nut 57 is fixed to the slide block 55. The ball screw 56 is meshed with the nut 57. The ball screw 56 extends in the left-right directions. The driving motor 53 is coupled to the ball screw 56, and rotates the ball screw 56 about the axis. Accordingly, the slide block 55 travels along the guide shafts 54. The slide block 55 is coupled to the support plate 52 of the retainer 50A through a slit 21F1 provided in the front wall 21F. Then, when the driving motor 53 is driven, the retainer 50A moves in the left-right directions. The adaptor moving device 50 moves the retainer 50A by the driver 50B to move the adaptor 5 in the left-right directions. The driving motor 53 in this preferred embodiment is a motor capable of detecting the amount of rotation, and a travel distance of the retainer 50A is detected by the driving motor 53.

The coupling member 58 couples the shutter 31 and the retainer 50A to each other to link movement of the shutter 31 and movement of the adaptor 5 to each other. In this preferred embodiment, the coupling member 58 couples the shutter 31 and the retainer 50A to each other through the slide block 55. As illustrated in FIG. 5, the left end of the coupling member 58 is connected to the shutter 31. The right end of the coupling member 58 is provided with a contact part 58a that is pushed by the slide block 55. As illustrated in FIG. 5, the contact part 58a is disposed on a moving path of the slide block 55. When the adaptor moving device 50 is driven so that the slide block 55 moves rightward, the slide block 55 and the contact part 58a that was not in contact with each other originally are brought into contact with each other. Then, when the slide block 55 continues to move rightward, the coupling member 58 moves rightward, and the shutter 31 is gradually closed. That is, the shutter 31 starts being closed from a state where the adaptor 5 is inserted in the housing 21 to a certain degree, and as the adaptor 5 further moves into the housing 21 (rightward in this preferred embodiment), the shutter 31 is gradually closed. In other words, as the adaptor 5 moves to the depth of the housing 21, the opening area of the first inlet 24 decreases. The adaptor moving device 50 as the shutter opening/closing device performs both movement of the adaptor 5 retained by the retainer 50A and opening/closing of the shutter 31 by the coupling member 58. The shutter 31 and the coupling member 58 may be one integrated unitary structure.

A limit switch 59 is provided at the right end of the moving path of the slide block 55. When the slide block 55 moves rightward, the slide block 55 is brought into contact with an arm 59a of the limit switch 59, and the limit switch 59 turns on. Accordingly, it is detected that the adaptor 5 has reached the right end.

The cleaning device 40 cleans the adaptor 5 retained by the retainer 50A of the adaptor moving device 50 in the internal space 21a of the housing 21. As illustrated in FIG. 6, the cleaning device 40 includes a first pivot arm 41, a second pivot arm 42, a pivot shaft 43 of the first pivot arm 41 and the second pivot arm 42, and an actuator 44 for causing the first pivot arm 41 and the second pivot arm 42 to pivot about the pivot shaft 43. The first pivot arm 41 is provided with a first nozzle 41N that injects compressed air to the upper surface 5U of the adaptor 5. The second pivot arm 42 is provided with a second nozzle 42N that injects compressed air to the lower surface 5D of the adaptor 5. Compressed air is supplied from an external air compressor M2 described later (see FIG. 10).

As illustrated in FIG. 6, the pivot shaft 43 extends in the top-bottom directions. The first pivot arm 41 is fixed to the pivot shaft 43, and disposed above the adaptor 5 retained by the retainer 50A. The first nozzle 41N supported by the first pivot arm 41 is also disposed above the adaptor 5 retained by the retainer 50A. The cleaning device 40 only needs to be configured such that the first nozzle 41N is located above the adaptor 5 retained by the retainer 50A, and the position of the first pivot arm 41 in the top-bottom directions is not limited to a position above the adaptor 5. For example, the first pivot arm 41 may be partially located above the adaptor 5. As illustrated in FIG. 6, the first nozzle 41N is open downward. The first nozzle 41N injects compressed air downward.

The second pivot arm 42 is located below the adaptor 5 retained by the retainer 50A. The second pivot arm 42 is also fixed to the pivot shaft 43. The second nozzle 42N supported by the second pivot arm 42 is also disposed below the adaptor 5 retained by the retainer 50A. The cleaning device 40 only needs to be configured such that the second nozzle 42N is located below the adaptor 5 retained by the retainer 50A, and the position of the second pivot arm 42 in the top-bottom directions is not limited to a position below the adaptor 5. As illustrated in FIG. 6, the second nozzle 42N is open upward. The second nozzle 42N injects compressed air upward.

As illustrated in FIG. 5, the first pivot arm 41 and the second pivot arm 42 overlap each other in plan view. The first pivot arm 41 and the second pivot arm 42 extend in the same direction from the common pivot shaft 43 in plan view. The positions of the first nozzle 41N and the second nozzle 42N are shifted in plan view. As illustrated in FIG. 6, the positions of the first nozzle 41N and the second nozzle 42N are shifted in the directions in which the adaptor 5 is moved by the adaptor moving device 50, which is in the left-right directions in this preferred embodiment. More specifically, the first nozzle 41N and the second nozzle 42N are located at different distances from the pivot shaft 43. In this preferred embodiment, as illustrated in FIG. 6, the cleaning device 40 is configured such that the distance between the first nozzle 41N and the pivot shaft 43 is longer than the distance between the second nozzle 42N and the pivot shaft 43. The distance between the second nozzle 42N and the pivot shaft 43 may be longer than the distance of the first nozzle 41N from the pivot shaft 43.

As illustrated in FIG. 6, the first pivot arm 41 is separated from the upper wall 21U. The first pivot arm 41 is disposed below the upper wall 21U. A gap is present between the first pivot arm 41 and the upper wall 21U. Similarly, the second pivot arm 42 is separated from the lower wall 21D. The second pivot arm 42 is disposed above the lower wall 21D. A gap is present between the second pivot arm 42 and the lower wall 21D. Consequently, a gap is present between the cleaning device 40 and the outlet 23. The gap between the cleaning device 40 and the wall of the housing 21 in the top-bottom directions is a channel in which air sucked from the first inlet 24 flows to the outlet 23, which will be described later.

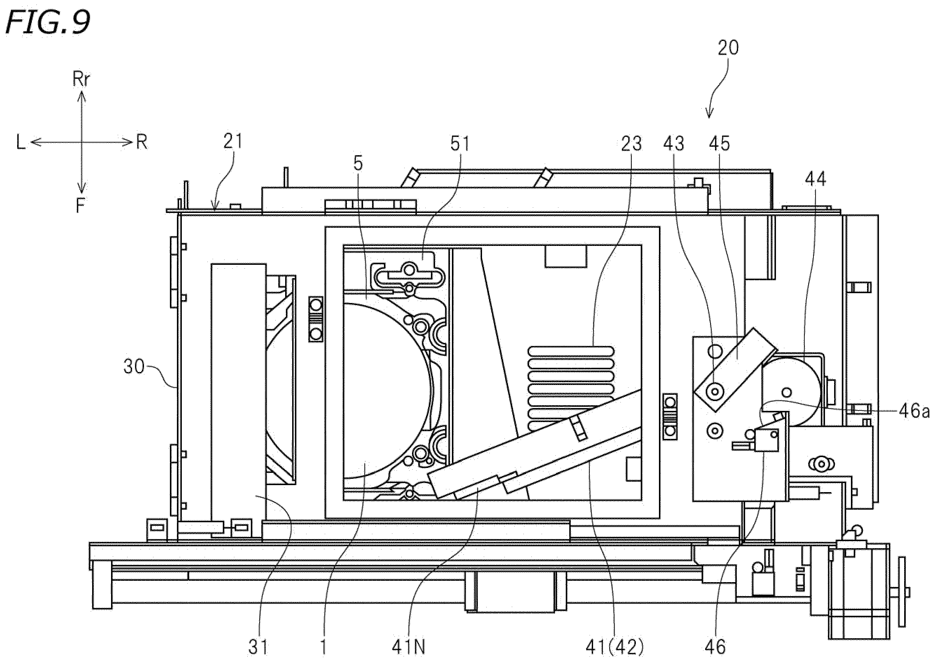

The first pivot arm 41 and the second pivot arm 42 pivot about the pivot shaft 43. FIG. 9 is a plan view illustrating the cleaning chamber 20 while the first pivot arm 41 and the second pivot arm 42 are pivoting. As illustrated in FIG. 9, both the first pivot arm 41 and the second pivot arm 42 are fixed to the pivot shaft 43 that pivots about the axis, and pivot in synchronization with each other. While pivoting, the first pivot arm 41 and the second pivot arm 42 overlap each other in plan view. The actuator 44 causes the pivot shaft 43 to pivot about the axis to cause the first pivot arm 41 and the second pivot arm 42 to pivot about the pivot shaft 43. The actuator 44 is not limited to a specific type, and an electric motor in this preferred embodiment. As illustrated in FIG. 6, a gear 44a is provided to the rotation shaft of the actuator 44. The gear 44a meshes with the gear 43a provided to the pivot shaft 43. When the actuator 44 is driven to rotate, the gear 44a rotates so that the gear 43a and the pivot shaft 43 rotate.

As illustrated in FIG. 5, a detection plate 45 is provided on the pivot shaft 43. The detection plate 45 is a flat-plate member and extends horizontally. As illustrated in FIG. 9, the detection plate 45 pivots together with the pivot shaft 43. A limit switch 46 is provided on a pivot path of the detection plate 45. When the pivot shaft 43 rotates clockwise when seen from above, the detection plate 45 is brought into contact with the arm 46a of the limit switch 46. Accordingly, the limit switch 46 turns on. The limit switch 46 is a sensor to detect pivot origins of the first pivot arm 41 and the second pivot arm 42. When the limit switch 46 detects the pivot origins of the first pivot arm 41 and the second pivot arm 42, the actuator 44 changes the rotation direction such that the pivot shaft 43 rotates counterclockwise when seen from above. When the actuator 44 causes the first pivot arm 41 and the second pivot arm 42 to pivot by a predetermined pivot angle, the actuator 44 changes the rotation direction again. The actuator 44 is, for example, a motor including an encoder and capable of measuring a rotation angle. By repeating the operation of changing the pivot direction described above, the first pivot arm 41 and the second pivot arm 42 pivot about the pivot shaft 43 back and forth. The method for causing the first pivot arm 41 and the second pivot arm 42 to pivot back and forth is not limited to the method described above.

FIG. 10 is a system diagram showing emission of air in the housing 21 and supply of compressed air. As illustrated in FIG. 10, the outlet 23 of the cleaning chamber 20 is connected to the exhaust device (dust collector) M1a. The exhaust device M1a sucks dust generated by cutting of the cutting object 1 and adhering to the adaptor 5 and the cutting object 1, together with air in the housing 21. In this preferred embodiment, two exhaust devices are connected to the cutting machine 10. As illustrated in FIG. 10, another exhaust device M1b is connected to the processing chamber 11. A common exhaust device may be connected to the cleaning chamber 20 and the processing chamber 11.

The cleaning device 40 includes an air circuit 60 connected to the air compressor M2. Although not shown, the cutting machine 10 may also include a nozzle to inject compressed air to a place except the cleaning chamber 20, such as the processing chamber 11, and may include an air circuit to supply compressed air to this place. As illustrated in FIG. 10, the air circuit 60 includes an air channel 61 and a channel switching member 62. The air channel 61 includes an inlet channel 61a, and a first channel 61b and a second channel 61c branched from the inlet channel 61a. One end of the inlet channel 61a is connected to the air compressor M2. The end of the inlet channel 61a connected to the air compressor M2 defines an air supply port 61d to which compressed air is supplied from the air compressor M2. The first channel 61b and the second channel 61c are respectively connected to the first nozzle 41N and the second nozzle 42N.

The channel switching member 62 is disposed in the air channel 61, and causes the air supply port 61d to selectively communicate with the first nozzle 41N or the second nozzle 42N. The channel switching member 62 in this preferred embodiment includes a first valve 62a provided in the first channel 61b, and a second valve 62b provided in the second channel 61c. The first valve 62a and the second valve 62b are electromagnetic valves in this preferred embodiment. The first valve 62a is opened during injection of compressed air from the first nozzle 41N. At this time, the second valve 62b is closed. During injection of compressed air from the second nozzle 42N, the second valve 62b is opened. At this time, the first valve 62a is closed. When no compressed air is injected from either of the first nozzle 41N and the second nozzle 42N, both the first valve 62a and the second valve 62b are closed. The channel switching member 62 is not limited to the configuration described above. For example, the channel switching member 62 may be a valve disposed at a branch point among the inlet channel 61a, the first channel 61b, and the second channel 61c and capable of switching the position between a first position in which the inlet channel 61a and the first channel 61b communicate with each other and a second position in which the inlet channel 61a and the second channel 61c communicate with each other. In this case, an opening/closing valve may be provided in the inlet channel 61a, for example.

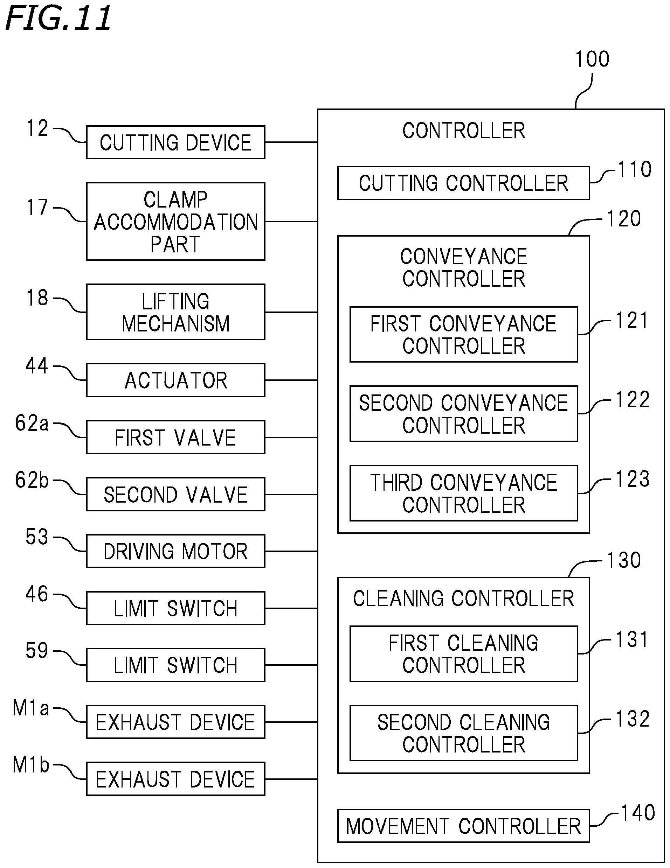

FIG. 11 is a block diagram of the cutting machine 10. As illustrated in FIG. 11, the cutting machine 10 includes the controller 100 configured or programmed to control operation of each component. The controller 100 is connected to the cutting device 12, the clamp accommodation part 17 and the lifting mechanism 18 of the conveyor 15, the actuator 44, the first valve 62a, and the second valve 62b of the cleaning device 40, the driving motor 53 of the adaptor moving device 50, the exhaust device M1a of the cleaning chamber 20, and the exhaust device M1b of the processing chamber 11. The controller 100 is configured or programmed to control operation of these components. The controller 100 is also connected to the limit switch 46 of the cleaning device 40 and the limit switch 59 of the adaptor moving device 50, and receives signals from these limit switches. The controller 100 may be connected to other members such as other limit switches, and illustration and description thereof will be omitted.

The controller 100 is not limited to a specific configuration. The controller 100 may include, for example, a central processing unit (hereinafter referred to as a CPU), a ROM to store, for example, a program to be executed by the CPU, a RAM, and so forth. Each component of the controller 100 may be software or hardware. Each component may be a processor or a circuit. As illustrated in FIG. 11, the controller 100 is configured or programmed to include a cutting controller 110, a conveyance controller 120, a cleaning controller 130, and a movement controller 140. The controller 100 may include other processing sections, and illustration and description thereof will be omitted.

The cutting controller 110 controls the cutting device 12 to cut the cutting object 1, and processes the cutting object 1 into a shape based on input cutting data. Although specifically described later, the cutting controller 110 is configured or programmed to enable cutting of another cutting object 1 during cleaning of the adaptor 5.

The conveyance controller 120 controls the conveyor 15 to convey the adaptor 5 to the processing chamber 11, the accommodation chamber 13, and the cleaning chamber 20. As illustrated in FIG. 11, the conveyance controller 120 includes a first conveyance controller 121, a second conveyance controller 122, and a third conveyance controller 123. After cutting of the cutting object 1 has been finished, the first conveyance controller 121 controls the conveyor 15 to convey the adaptor 5 in the processing chamber 11 to the cleaning chamber 20. After cleaning of the adaptor 5 has been finished, the second conveyance controller 122 controls the conveyor 15 to convey the adaptor 5 in the cleaning chamber 20 to the accommodation chamber 13. The third conveyance controller 123 controls the conveyor 15 to convey the selected adaptor 5 from the accommodation chamber 13 to the processing chamber 11. The selected adaptor 5 is an adaptor 5 retaining a cutting object 1 to be cut.

The cleaning controller 130 includes a first cleaning controller 131 and a second cleaning controller 132. The first cleaning controller 131 controls the cleaning device 40 to clean the adaptor 5 in the cleaning chamber 20. Specifically, the first cleaning controller 131 controls the first valve 62a and the second valve 62b, and causes the first nozzle 41N or the second nozzle 42N to inject compressed air. The order of injecting compressed air from the first nozzle 41N or the second nozzle 42N is registered beforehand. In this preferred embodiment, the first cleaning controller 131 is set such that the second nozzle 42N injects compressed air and then the first nozzle 41N injects compressed air. In other words, the first cleaning controller 131 injects air upward to clean the adaptor 5 and then injects air downward to clean the adaptor 5. The first cleaning controller 131 controls the actuator 44 to cause the first pivot arm 41 and the second pivot arm 42 to pivot. During cleaning of the adaptor 5, the first cleaning controller 131 drives the exhaust device M1a.

The second cleaning controller 132 controls cleaning operation in the cleaning chamber 20 after cleaning of the adaptor 5 is finished and the adaptor 5 is conveyed from the cleaning chamber 20. After cleaning of the adaptor 5, the second cleaning controller 132 controls the cleaning device 40 and causes at least one of the first nozzle 41N or the second nozzle 42N to inject compressed air to clean the cleaning chamber 20. In cleaning in the cleaning chamber 20, the order of injecting compressed air from the first nozzle 41N or the second nozzle 42N is also registered beforehand. The order is not specifically limited, and may be similar to that during cleaning of the adaptor 5. The second cleaning controller 132 may be configured to drive the exhaust device M1a during cleaning in the cleaning chamber 20.

The movement controller 140 controls operation of the adaptor moving device 50. In transferring the adaptor 5 from the conveyor 15 to the adaptor moving device 50, the movement controller 140 moves the retainer 50A to the outside of the housing 21. The position of the retainer 50A at this time will be hereinafter referred to as a transfer position. The transfer position is the position of the retainer 50A illustrated in FIG. 5. During cleaning of the adaptor 5, the movement controller 140 moves the retainer 50A between the right end (the deepest position of the housing 21 in the movable range, hereinafter referred to as a standby position) and a cleaning end position at a predetermined distance to the left from the standby position. The standby position is the position of the retainer 50A illustrated in FIG. 7. Although not shown, the cleaning end position is set at a position at which the door 30 is not opened by the retainer 50A and the adaptor 5 is located at the left of the first nozzle 41N. The cleaning end position is located between the standby position and the transfer position in the left-right directions. Control of the adaptor moving device 50 by the movement controller 140 will be specifically described in description of a cleaning process.

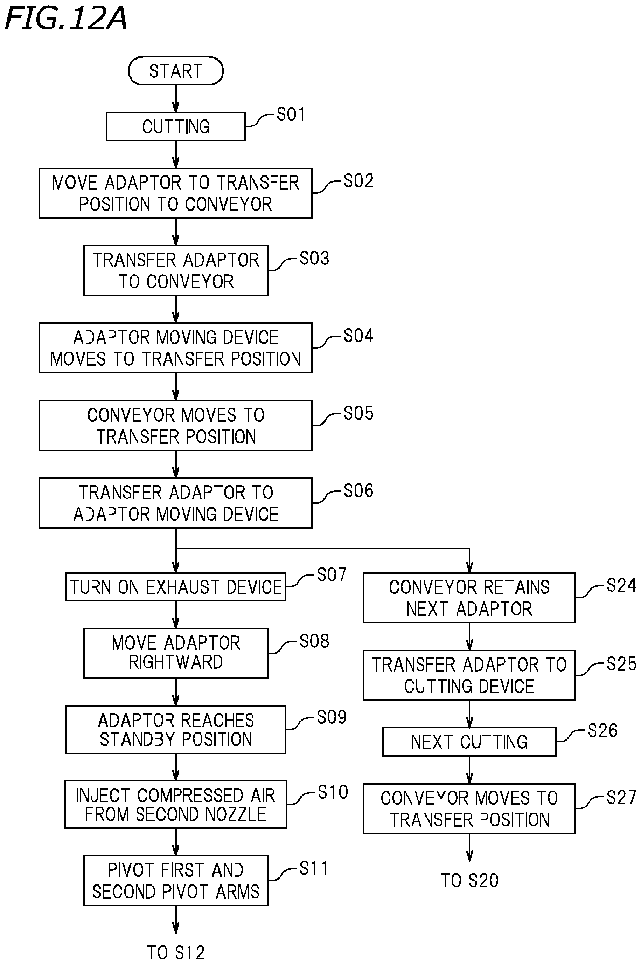

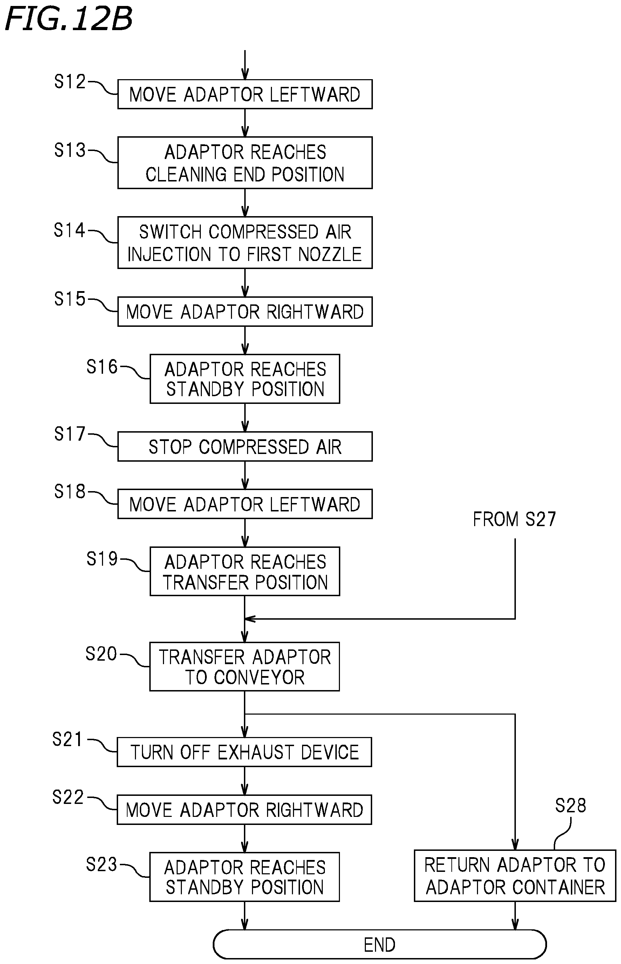

It will now be described an example of a process from cutting of the cutting object 1 to returning of the adaptor 5 to the accommodation chamber 13 through cleaning of the adaptor 5 with reference to a flowchart. FIGS. 12A and 12B show a flowchart depicting a process from cutting of the cutting object 1 to returning of the adaptor 5 to the accommodation chamber 13. FIG. 12A shows a first half of the flowchart. FIG. 12B is a second half of the flowchart. As shown in FIG. 12A, description starts from step S01 in which the cutting object 1 is subjected to a cutting process in the processing chamber 11. After the cutting process of the cutting object 1 in step S01 is finished, in step S02, the adaptor 5 retaining the cutting object 1 after the cutting process is moved to a transfer position to the conveyor 15 by the moving device of the cutting device 12. In step S03, the conveyor 15 receives the adaptor 5 retaining the cutting object 1 after the cutting process from the cutting device 12. At this time, cutting powder generated by the cutting process of the cutting object 1 adheres to the adaptor 5 and the cutting object 1.

In step S04, the adaptor moving device 50 moves the retainer 50A from the standby position to the transfer position. While the retainer 50A is at the standby position, the shutter 31 is fully closed as illustrated in FIG. 7. While the retainer 50A is at the standby position, the door 30 is closed. When the retainer 50A moves to the transfer position, as illustrated in FIG. 5, pushing of the coupling member 58 by the retainer 50A is released so that the shutter 31 is opened. In addition, the retainer 50A pushes the door 30 so that the door 30 is opened toward outside of the housing 21.

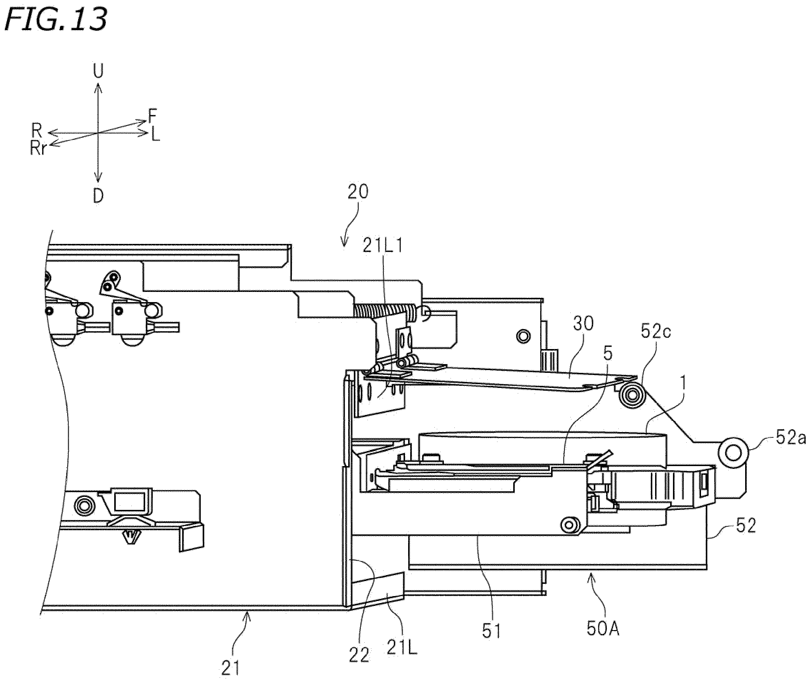

FIG. 13 is a perspective view illustrating the retainer 50A and the door 30 while the retainer 50A is at the transfer position. As illustrated in FIG. 13, while the retainer 50A is at the transfer position, the second washer 52c of the retainer 50A supports the door 30 in an open state. Although an intermediate state is not shown, when the retainer 50A is moved leftward, the first washer 52a is first brought into contact with the door 30 and opens the door 30 by pushing. Thereafter, the retainer 50A is further moved leftward, and when the door 30 is further opened, a portion supporting the door 30 changes from the first washer 52a to the second washer 52c.

In step S05, the conveyor 15 is moved upward, and is located at the transfer position of the adaptor 5 to the adaptor moving device 50. In step S06, the adaptor 5 is transferred from the conveyor 15 to the adaptor moving device 50. The adaptor moving device 50 is configured such that the retainer 50A moves between the inside and outside of the cleaning chamber 20 through the entrance 22 of the adaptor 5 and transfers the adaptor 5 to and from the conveyor 15. After step S06, the cleaning device 40 and the adaptor moving device 50 operate separately from and simultaneously with the conveyor 15 and the cutting device 12. Thus, after step S06, steps concerning operation of the cleaning device 40 and the adaptor moving device 50 and steps concerning operation of the conveyor 15 and the cutting device 12 will be illustrated in different systems. The order of steps S02 through S06 may be changed if possible.

Steps concerning operation of the cleaning device 40 and the adaptor moving device 50 will be described first. In step S07, the exhaust device M1a is driven. Thus, air is discharged from the outlet 23. Accordingly, outside air starts flowing into the housing 21 from the first inlet 24 and the pair of second inlets 26. In subsequent step S08, the adaptor 5 retained by the retainer 50A is moved to the depth of the housing 21, that is, to the right in this preferred embodiment. The movement of the retainer 50A causes the door 30 to be closed. The door 30 is opened when being pushed leftward by the retainer 50A moved by the driver 50B, and is closed by the self-weight in the absence of support by the retainer 50A. The controller 100 controls the cleaning device 40 to clean the adaptor 5, and during cleaning of the adaptor 5, controls the adaptor moving device 50 as the opening/closing device of the door 30 to close the door 30. The cutting machine 10 may include an opening/closing device of the door 30 independent of the adaptor moving device 50.

When the door 30 is closed, the amount of outside air flowing from the entrance 22 decreases, and air flows into the cleaning chamber 20 mainly through the first inlet 24 and the pair of second inlets 26. As illustrated in FIG. 5, until the slide block 55 starts pushing the coupling member 58, the shutter 31 is fully open. Thus, the opening area of the first inlet 24 is at maximum to this time. While the opening area of the first inlet 24 is at maximum, a large portion of air flowing into the housing 21 is air flowing from the first inlet 24. The opening area of the pair of second inlets 26 is considerably smaller than the opening area of the first inlet 24 while the shutter 31 is fully open. Thus, while the opening area of the first inlet 24 is at maximum, the amount of air flowing from the second inlets 26 is small.

When the slide block 55 moves to contact the coupling member 58, the slide block 55 pushes the coupling member 58 so that the shutter 31 starts closing. Accordingly, the opening area of the first inlet 24 starts decreasing. The controller 100 controls the adaptor moving device 50 as the moving device of the adaptor 5 and the opening/closing device of the shutter 31 to open and close the shutter 31 and move the adaptor 5, while controlling the cleaning device 40 to clean the adaptor 5. When the opening area of the first inlet 24 gradually decreases by gradual closing of the shutter 31, the amount of air flowing from the first inlet 24 gradually decreases, and the amount of air flowing from the second inlets 26 gradually increases. When the shutter 31 is fully closed, the opening area of the first inlet 24 (except for a gap between the first inlet 24 and the shutter 31) becomes zero, and a major portion of the air flowing into the housing 21 is air flowing from the pair of second inlets 26. Advantages obtained by the change in intake air amount balance between the first inlet 24 and the second inlets 26 will be described later.

In step S09, the retainer 50A reaches the standby position at the right end of the movable range. The limit switch 59 detects that the retainer 50A has reached the standby position. In subsequent step S10, the second valve 62b is opened, and compressed air is injected from the second nozzle 42N. Accordingly, compressed air is injected upward. Compressed air injected upward from the second nozzle 42N is blown to the lower surface 5D of the adaptor 5. In step S11, pivot of the first pivot arm 41 and the second pivot arm 42 starts. As shown in FIG. 12B, in next step S12, the retainer 50A is moved leftward. The injection of compressed air, the pivot of the first pivot arm 41 and the second pivot arm 42, and the movement of the retainer 50A cause cleaning of the adaptor 5 to start substantially.

In this preferred embodiment, each of the pivot of the first pivot arm 41 and the second pivot arm 42 and the movement of the retainer 50A is intermittently performed. In steps S11 and S12, first, the first pivot arm 41 and the second pivot arm 42 pivot from the origin by a predetermined angle. The pivot direction at this time is counterclockwise when seen from above. When the first pivot arm 41 and the second pivot arm 42 finish pivoting by the predetermined angle and stop temporarily, the retainer 50A is moved leftward to a predetermined distance (e.g., about 1 mm to about 5 mm). Thereafter, the first pivot arm 41 and the second pivot arm 42 rotate in the opposite direction, and return to the origin. When the first pivot arm 41 and the second pivot arm 42 return to the origin, the retainer 50A moves leftward to the predetermined distance again. In this preferred embodiment, this intermittent operation is repeated so that the first pivot arm 41 and the second pivot arm 42 are caused to pivot while moving the adaptor 5 in the moving direction of the retainer 50A.

In steps S11 and S12, the second nozzle 42N moves in the pivot direction of the second pivot arm 42, and the adaptor 5 moves in a direction (leftward in this preferred embodiment) intersecting with the pivot direction of the second pivot arm 42 so that compressed air from the second nozzle 42N is sequentially blown to the entire lower surface 5D of the adaptor 5. Accordingly, the entire lower surface 5D of the adaptor 5 is sequentially cleaned. The operation of the cleaning device 40 and the adaptor moving device 50 described above is merely a preferred example, and operation of the cleaning device 40 and the adaptor moving device 50 in cleaning of the adaptor 5 is not limited. For example, in cleaning of the adaptor 5, the adaptor moving device 50 may continuously move the retainer 50A in the left-right directions.

In step S13, the retainer 50A reaches the cleaning end position. The driving motor 53 detects that the retainer 50A has reached the cleaning end position. When the retainer 50A reaches the cleaning end position, the moving direction of the retainer 50A and the nozzle that injects compressed air change. In step S14, the nozzle that injects compressed air is switched from the second nozzle 42N to the first nozzle 41N. Accordingly, the direction of compressed air changes to the downward direction. In step S15, the moving direction of the retainer 50A and the adaptor 5 changes to the right. The first nozzle 41N moves in the pivot direction of the first pivot arm 41 and the adaptor 5 moves in the direction (rightward in this preferred embodiment) intersecting with the pivot direction of the first pivot arm 41 so that compressed air from the first nozzle 41N is sequentially blown to the entire upper surface 5U of the adaptor 5. Accordingly, the entire upper surface 5U of the adaptor 5 is sequentially cleaned.

In step S16, the retainer 50A reaches the standby position. At this time, the first pivot arm 41 and the second pivot arm 42 are located at the origin. In subsequent step S17, the first valve 62a is closed, and injection of compressed air from the first nozzle 41N stops. The pivot of the first pivot arm 41 and the second pivot arm 42 stops at this time. In this manner, cleaning of the adaptor 5 is finished.

In next step S18, the retainer 50A is moved leftward again. The leftward movement causes the retainer 50A to reach the transfer position in step S19. In the process in which the retainer 50A reaches the transfer position, the door 30 is opened. In step S20, the adaptor 5 subjected to cleaning is transferred to the conveyor 15. After transferring the adaptor 5 subjected to cleaning, the exhaust device M1a is turned off in step S21. In step S22, the retainer 50A moves rightward to the standby position again. In step S23, when it is detected that the retainer 50A has reached the standby position, the steps concerning operation of the cleaning device 40 and the adaptor moving device 50 are finished.

Thereafter, based on control of the second cleaning controller 132, cleaning of the cleaning chamber 20 may be started (not shown). In cleaning of the cleaning chamber 20, for example, compressed air may be injected sequentially from at least one of the first nozzle 41N or the second nozzle 42N or from the first nozzle 41N and the second nozzle 42N, and the first pivot arm 41 and the second pivot arm 42 may pivot back and forth. During this operation, the exhaust device M1a may be driven.

Operation of the conveyor 15 and the cutting device 12 after step S06 will now be described. As shown in FIG. 12A, in step S24 following step S06, the conveyor 15 moves to the side of the adaptor containers 14 accommodating the adaptor 5 retaining a cutting object 1 to be next cut, and holds the adaptor 5. In subsequent step S25, the next adaptor 5 is transferred from the conveyor 15 to the cutting device 12. In step S26, the next cutting object 1 is subjected to a cutting process by the cutting device 12. At this time, in the cleaning chamber 20, cleaning is performed on the adaptor 5 retaining the cutting object 1 after the cutting process. The cutting machine 10 is capable of cutting another cutting object 1 during cleaning of the adaptor 5. If a cutting object 1 to be next processed is not set, steps S24 through S26 are omitted.

In step S27, the conveyor 15 moves to the transfer position of the adaptor 5 to the adaptor moving device 50. Step S27 is followed by step S20, and the adaptor 5 after cleaning is transferred to the conveyor 15. As shown in FIG. 12B, in next step S28 for the conveyor 15, the adaptor 5 after cleaning is returned to the adaptor containers 14 by the conveyor 15. Accordingly, the steps concerning the conveyor 15 and the cutting device 12 are finished.

Advantages of the cutting machine 10 according to this preferred embodiment will be described hereinafter.

The cutting machine 10 according to this preferred embodiment includes the processing chamber 11 provided with the cutting device 12 to cut the cutting object 1 retained by the adaptor 5, the cleaning chamber 20 provided with the cleaning device 40 to clean the adaptor 5, and the conveyor 15 to convey the adaptor 5 to the processing chamber 11 and the cleaning chamber 20. In a conventional cutting machine, cleaning of an adaptor and a cutting object after a cutting process is performed in a processing chamber or manually performed outside the cutting machine. In the former case, the time for the cutting process includes the cleaning time of the adaptor 5, and thus, the time for the cutting process is long. In the latter case, a user is under a load of cleaning the adaptor. On the other hand, in this preferred embodiment, the cutting machine 10 includes the cleaning chamber 20 to clean the adaptor 5 provided as a separate structure from the processing chamber 11, and the conveyor 15 to convey the adaptor 5 to the processing chamber 11 and the cleaning chamber 20. Thus, the adaptor 5 retaining the cutting object 1 after the cutting process is conveyed to the cleaning chamber 20 so that the next cutting object 1 can be processed without waiting for cleaning of the adaptor 5. Accordingly, the time for a cutting process on the cutting object 1 can be reduced. In addition, since cleaning of the adaptor 5 is performed by the cleaning device 40 provided in the cleaning chamber 20, a load on a user can be reduced, unlike manual cleaning of the adaptor.

The cutting machine 10 according to this preferred embodiment includes the accommodation chamber 13 capable of accommodating the plurality of adaptors 5, and the controller 100 to control automatic cleaning of the adaptor 5 retaining the cutting object 1 after cutting. After cutting of the cutting object 1 is finished, the cutting machine 10 controls the conveyor 15 to convey the adaptor 5 in the processing chamber 11 to the cleaning chamber 20. The cutting machine 10 further controls the cleaning device 40 to clean the adaptor 5 in the cleaning chamber 20. After cleaning of the adaptor 5 is finished, the cutting machine 10 controls the conveyor 15 to convey the adaptor 5 in the cleaning chamber 20 to the accommodation chamber 13. With this configuration, the adaptor 5 and the cutting object 1 to which cutting powder generated by a cutting process adheres are automatically conveyed to the cleaning chamber 20 by the conveyor 15, and subjected to cleaning by the cleaning device 40. Thus, a load by conveyance and cleaning on a user can be reduced. The adaptor 5 is automatically returned to the accommodation chamber 13 after cleaning.

The cutting machine 10 according to this preferred embodiment is capable of cutting another cutting object 1 during cleaning of the adaptor 5. With this configuration, another cutting object 1 can be processed without waiting for the end of cleaning of the adaptor 5. Thus, a throughput of a cutting process can be increased.

In this preferred embodiment, the cleaning device 40 includes the first nozzle 41N and the second nozzle 42N that inject compressed air toward the adaptor 5. With this configuration, cleaning of the adaptor 5 can be easily performed by blowing compressed air.

In addition, in this preferred embodiment, the cleaning device 40 has a configuration to shift the positions of the first nozzle 41N and the second nozzle 42N. The structure to shift the positions of the first nozzle 41N and the second nozzle 42N includes the first pivot arm 41, the second pivot arm 42, the pivot shaft 43, and the actuator 44 in this preferred embodiment. With this configuration, since the positions of the first nozzle 41N and the second nozzle 42N that inject compressed air are shifted, compressed air can be blown to various portions of the adaptor 5. Thus, cleaning can be more favorably performed on the adaptor 5. The structure to shift the positions of the nozzles is not specifically limited, and the advantages described above can be obtained by other configurations.

The cutting machine 10 according to this preferred embodiment further includes the adaptor moving device 50 to change the position of the adaptor 5 in the cleaning chamber 20. With this configuration, by changing the position of the adaptor 5 in the cleaning chamber 20, compressed air can be blown to various portions of the adaptor 5. Thus, with this configuration, the adaptor 5 can also be cleaned more favorably.

In this preferred embodiment, the direction in which the adaptor moving device 50 moves the adaptor 5 and the direction in which the first nozzle 41N and the second nozzle 42N move intersect with each other. In this preferred embodiment, the pivot direction of the first pivot arm 41 and the second pivot arm 42 intersects with the direction in which the adaptor moving device 50 moves the adaptor 5. With this configuration, since the adaptor 5 and the first nozzle 41N and the second nozzle 42N relatively move in two dimensions, compressed air can be more efficiently blown to a wider range of the adaptor 5.

In this preferred embodiment, the first nozzle 41N is disposed above the adaptor 5 retained by the retainer 50A, and injects compressed air to the upper surface 5U of the adaptor 5 retained by the retainer 50A. The second nozzle 42N is disposed below the adaptor 5 retained by the retainer 50A, and injects compressed air to the lower surface 5D of the adaptor 5 retained by the retainer 50A. With this configuration, both surfaces of the flat-plate adaptor 5 retaining the disc-shaped cutting object 1 can be cleaned.

In this preferred embodiment, the positions of the first nozzle 41N and the second nozzle 42N are shifted from each other in plan view. To clean both surfaces of the flat-plate adaptor 5, the first nozzle 41N is preferably disposed above the adaptor 5 and open downward, and the second nozzle 42N is preferably disposed below the adaptor 5 and open upward. However, the inventor of the present application discovered that if the first nozzle 41N and the second nozzle 42N face each other, dust blown by compressed air from one of the nozzles might enter the other nozzle to cause damage to, for example, an air circuit to which dust has entered. In view of this, in this preferred embodiment, the position of the first nozzle 41N and the position of the second nozzle 42N are shifted or spaced from each other in plan view. With this configuration, the possibility of entering of dust blown by compressed air from one of the nozzles into the other nozzle can be reduced. Thus, the possibility of damage of, for example, the air circuit described above can be reduced or eliminated.

More specifically, in this preferred embodiment, the positions of the first nozzle 41N and the second nozzle 42N are shifted or spaced from each other in the moving direction of the adaptor 5. Since compressed air is blown to various portions of the adaptor 5, the adaptor 5 is preferably moved inside the cleaning chamber 20. Accordingly the length of the cleaning chamber 20 in the moving direction of the adaptor 5 increases. In this preferred embodiment, the positions of the first nozzle 41N and the second nozzle 42N are different in the moving direction of the adaptor 5 that is the longitudinal direction of the cleaning chamber 20. Thus, the positions of the first nozzle 41N and the second nozzle 42N can be easily shifted or spaced from each other. In addition, the length of the cleaning device 40 in the direction intersecting with the moving direction of the adaptor 5 is less likely to increase.

In the configuration in which the first nozzle 41N and the second nozzle 42N are shifted or spaced from each other in the moving direction of the adaptor 5, when the adaptor 5 is moved, an influence of the positional shift between the first nozzle 41N and the second nozzle 42N (e.g., a difference in cleanliness between the upper surface 5U and the lower surface 5D caused by a difference in location on the adaptor 5 to which compressed air is blown) can be reduced.

In this preferred embodiment, the first nozzle 41N is provided to the first pivot arm 41, and the position of the first nozzle 41N is changed by pivot of the first pivot arm 41. The second nozzle 42N is provided to the second pivot arm 42 that pivots about the pivot shaft 43 shared by the first pivot arm 41, and the position of the second nozzle 42N is changed by pivot of the second pivot arm 42. With this configuration, by adjusting the position of the first nozzle 41N in the first pivot arm 41 and the position of the second nozzle 42N in the second pivot arm 42, the positions of the first nozzle 41N and the second nozzle 42N are easily shifted or spaced from each other, and the first nozzle 41N and the second nozzle 42N can be moved together.

In addition, in this preferred embodiment, the first pivot arm 41 and the second pivot arm 42 overlap each other in plan view and pivot in synchronization. Thus, the width of the cleaning device 40 in the pivot direction of the first pivot arm 41 and the second pivot arm 42 can be reduced. In this preferred embodiment, the pivot direction of the first pivot arm 41 and the second pivot arm 42 is a direction intersecting with the moving direction of the adaptor 5. Accordingly, the length of the cleaning device 40 in the direction intersecting with the moving direction of the adaptor 5 can be reduced.

In this preferred embodiment, the cleaning device 40 includes the channel switching member 62 that causes the air supply port 61d to selectively communicate with the first nozzle 41N or the second nozzle 42N. With this configuration, compressed air is injected from only one of the first nozzle 41N or the second nozzle 42N. In a configuration in which compressed air is injected from a large number of nozzles at the same time, the pressure of compressed air needs to be high in order to obtain a sufficient flow rate of compressed air injected from the nozzles. If the pressure of the compressed air is not high, the flow rate of compressed air injected from the nozzles are low disadvantageously. On the other hand, in this preferred embodiment, since compressed air is not injected from the first nozzle 41N and the second nozzle 42N at the same time, the pressure of compressed air does not need to be significantly high.

With respect to the timing of injecting compressed air from the first nozzle 41N or the second nozzle 42N, in the cutting machine 10 according to this preferred embodiment, compressed air is injected from the second nozzle 42N located below the adaptor 5, and then compressed air is injected from the first nozzle 41N located above the adaptor 5. In other words, after cleaning of the adaptor 5 has been performed by injecting compressed air upward, cleaning of the adaptor 5 is performed by injecting compressed air downward. With this configuration, dust accumulated on the adaptor 5 after being blown up by compressed air injected upward can be removed by compressed air injected downward. Accordingly, cleaning of the adaptor 5 can be performed move favorably.

In this preferred embodiment, the cleaning chamber 20 includes the outlet 23 to which the exhaust device M1a is connected. With this configuration, cleaning by the cleaning device 40 can release dust accumulated in the cleaning chamber 20 out of the cleaning chamber 20.

In addition, in this preferred embodiment, the cleaning chamber 20 includes the box-shaped housing 21 accommodating the cleaning device 40, and the housing 21 includes the first inlet 24 and the second inlets 26. The first inlet 24 is provided with the shutter 31. The adaptor moving device 50 as the shutter opening/closing device is configured to open and close the shutter 31, and change the opening area of the first inlet 24 by opening and closing the shutter 31. With this configuration, by opening and closing the shutter 31, the balance of intake air amount between the first inlet 24 and the second inlets 26 can be changed. When the amount of intake air from the second inlets 26 is increased and the amount of wind from the second inlets 26 toward the outlet 23 is increased, dust that is difficult to guide with a flow of wind from the first inlet 24 toward the outlet 23 can be guided to the outlet 23. If the flow of wind from the first inlet 24 toward the outlet 23 is strong, dust in the middle of the wind flow can be guided to the outlet 23. Accordingly, the amount of dust remaining in the housing 21 without being released can be reduced.

In this preferred embodiment, the adaptor moving device 50 as the shutter opening/closing device includes the coupling member 58 coupling the shutter 31 to the retainer 50A. The adaptor moving device 50 is configured to perform both opening and closing of the shutter 31 and movement of the adaptor 5 retained by the retainer 50A. With this configuration, the opening/closing device of the shutter 31 and the adaptor moving device 50 are shared so that the configuration of the cutting machine 10 can be simplified.

In this preferred embodiment, the second inlets 26 are disposed forward of one end (right end in this preferred embodiment) of the moving path of the adaptor 5, and the adaptor moving device 50 is configured to gradually close the shutter 31 as the adaptor 5 approaches this end (right end in this preferred embodiment). With this configuration, as the adaptor 5 approaches one end, the intake air amount of the second inlets 26 increases. In other words, as the adaptor 5 to which dust adheres approaches the second inlets 26, the intake air amount of the second inlets 26 gradually increases. Thus, dust release efficiency is high.

In this preferred embodiment, the outlet 23 is disposed between the first inlet 24 and the second inlets 26. With this configuration, the direction of wind from the first inlet 24 toward the outlet 23 is different from the direction of wind from the second inlets 26 toward the outlet 23. Thus, the advantage of changing the balance in intake air amount between the first inlet 24 and the second inlets 26 by opening and closing the shutter 31 is more effective. For example, if the direction of wind from the first inlet 24 toward the outlet 23 is substantially the same as the direction of wind from the second inlets 26 toward the outlet 23, it is basically preferable that the amount of intake air at location farther from the outlet 23 is large. In view of this, in this case, advantages obtained by changing the balance in intake air amount between the first inlet 24 and the second inlets 26 are small, as compared to this preferred embodiment.

In this preferred embodiment, the outlet 23 is open in the lower wall 21D to intersect with the opening directions (left-right directions in this preferred embodiment) of the entrance 22 of the adaptor 5. The first inlet 24 is open in the upper wall 21U to face the outlet 23 when seen in the opening directions of the entrance 22. In addition, the first inlet 24 is located closer to the entrance 22 than the cleaning device 40 in the opening directions of the entrance 22. With this configuration, the flow of wind from the first inlet 24 toward the outlet 23 is generated to close the entrance 22 at a location closer to the entrance 22 than the cleaning device 40 (see arrow W1 in FIG. 6). Thus, this flow of wind can reduce or prevent the release of dust flying by cleaning of the adaptor 5 to the outside through the entrance 22. The wind flow W1 from the first inlet 24 toward the outlet 23 serves as an air curtain to reduce or prevent the release of dust to the outside through the entrance 22.

In addition, in this preferred embodiment, the outlet 23 is disposed farther from the entrance 22 than the first inlet 24 in the opening directions of the entrance 22. With this configuration, the wind flow from the first inlet 24 toward the outlet 23 travels toward the depth of the housing 21 (to the opposite side to the entrance 22 with respect to the first inlet 24, i.e., rightward in this preferred embodiment). Thus, the reduction or prevention of the release of dust to the outside through the entrance 22 can be more effective.

In this preferred embodiment, the outlet 23 is disposed farther from the entrance 22 than the end of the cleaning device 40 toward the entrance 22, in the opening directions of the entrance 22. The end of the cleaning device 40 toward the entrance 22 is the front ends (left ends) of the first pivot arm 41 and the second pivot arm 42 in this preferred embodiment. In addition, a gap is provided between the cleaning device 40 and the outlet 23. In other words, the cleaning device 40 is spaced away from the lower wall 21D. With this configuration, wind W1 from the first inlet 24 toward the outlet 23 passes between the cleaning device 40 and the lower wall 21D (see FIG. 6). Thus, dust around the cleaning device 40 can be efficiently guided to the outlet 23. Wind from the first inlet 24 toward the outlet 23 also passes between the cleaning device 40 and the upper wall 21U (see arrow W2 in FIG. 6), and guides dust near the upper surface of the cleaning device 40 to the outlet 23.

In this preferred embodiment, the door 30 is provided at the entrance 22 of the adaptor 5. The door 30 can further reduce or prevent release of dust to the outside through the entrance 22.

The cutting machine 10 according to this preferred embodiment is set such that the door 30 is closed during cleaning of the adaptor 5. Accordingly, the cutting machine 10 suppresses release of dust to the outside through the entrance 22 during cleaning in which a large amount of dust flies from the adaptor 5.

The adaptor moving device 50 is configured such that the retainer 50A reciprocates between the inside and outside of the cleaning chamber 20 through the entrance 22 and transfers the adaptor 5 to and from the conveyor 15. In this preferred embodiment, the door 30 is opened and closed by pivoting in the moving directions of the adaptor 5 (in the left-right directions in this preferred embodiment). The door 30 is opened when being pushed by the reciprocating retainer 50A in the moving direction of the adaptor 5, that is, leftward in this preferred embodiment, and is closed by the self-weight. With this configuration, the door 30 can be opened and closed by using transfer of the adaptor 5 between the conveyor 15 and the adaptor moving device 50 so that no dedicated opening/closing device for opening and closing the door 30 is needed.

### OTHER PREFERRED EMBODIMENTS

Cutting machines according to preferred embodiments have been described above. Preferred embodiments of the present invention, however, are not limited to the types described above.

The cutting machine may include a plurality of cleaning chambers and a plurality of cleaning devices.

In the preferred embodiments described above, the conveyor 15 transfers the adaptor 5 to and from the adaptor moving device 50, but may bring the adaptor 5 into the cleaning chamber 20. The conveyor is not limited to a specific configuration.

The cleaning device is not limited to a specific configuration. For example, the cleaning device does not need to include nozzles above and below the adaptor retainer, and may include a nozzle only at one side of the adaptor retainer. The nozzles may not need to move, and the adaptor may not move during cleaning. Compressed air may be injected from a plurality of nozzles at the same time. In addition, the cleaning method of the cleaning device may not be the method of blowing compressed air to the adaptor.

Whether the cleaning chamber includes the outlet, the inlet, the shutter of the inlet, the door of the adaptor entrance, and of forth is optional. If these components are provided, arrangement of these components is not specifically limited, either.

Preferred embodiments are not intended to limit the present invention unless otherwise noted. For example, the cutting machine may not be a dental cutting machine for producing dental shaped products. The invention is solely defined by the appended claims.

## Claims

1. A cutting machine (10) comprising:
a processing chamber (11) provided with a cutting device (12) to cut a cutting object (1) retained by an adaptor (5);
a cleaning chamber (20) provided with a cleaning device (40) to clean the adaptor (5);
a conveyor (15) to convey the adaptor (5) to the processing chamber (11) and the cleaning chamber (20);
an accommodation chamber (13) capable of accommodating a plurality of adaptors (5); and
a controller (100) configured or programmed to control the cutting device (12), the cleaning device (40), and the conveyor (15); wherein
the cutting machine (10) has a box shape to accommodate the processing chamber (11), the cleaning chamber (20), the conveyor (15), and the accommodation chamber (13),
the controller (100) is configured or programmed to include:
a cutting controller (110) configured or programmed to control the cutting device (12) to cut the cutting object (1);
a first conveyance controller (121) configured or programmed to control the conveyor (15) to convey the adaptor (5) in the processing chamber (11) to the cleaning chamber (20) after cutting of the cutting object (1) is finished;
a cleaning controller (130) configured or programmed to control the cleaning device (40) to clean the adaptor (5) in the cleaning chamber (20); and
a second conveyance controller (122) configured or programmed to control the conveyor (15) to convey the adaptor (5) in the cleaning chamber (20) to the accommodation chamber (13) after cleaning of the adaptor (5) is finished.

2. The cutting machine (10) according to claim 1, wherein the cutting controller (110) is configured or programmed to enable cutting of another cutting object (1) during cleaning of the adaptor (5).

3. The cutting machine (10) according to claim 1 or 2, wherein the cleaning device (40) includes a first nozzle (41N) to inject compressed air toward the adaptor (5).

4. The cutting machine (10) according to claim 3, wherein the cleaning device (40) includes a nozzle moving device to move the first nozzle (41N).

5. The cutting machine (10) according to claim 4, further comprising an adaptor moving device (50) to change a position of the adaptor (5) in the cleaning chamber (20).

6. The cutting machine (10) according to claim 5, wherein the adaptor moving device (50) moves the adaptor (5) in a direction intersecting with a direction in which the nozzle moving device moves the first nozzle (41N).

7. The cutting machine (10) according to any one of claims 3 to 6, further comprising:
a retainer (50A) to retain the adaptor (5); wherein
the cutting object (1) has a disc shape;
the adaptor (5) has a flat plate shape including a first surface and a second surface, the second surface being a back surface of the first surface;
the retainer (50A) retains the adaptor (5) such that the first surface of the adaptor (5) faces in a first direction and the second surface of the adaptor (5) faces in a second direction, the second direction being an opposite direction to the first direction;
the first nozzle (41N) is positioned forward of the adaptor (5) retained by the retainer (50A) in the first direction to inject compressed air to the first surface of the adaptor (5);
the cleaning device (40) further includes a second nozzle (42N) positioned forward of the adaptor (5) retained by the retainer (50A) in the second direction to inject compressed air to the second surface of the adaptor (5); and
a position of the first nozzle (41N) and a position of the second nozzle (42N) are spaced from each other when seen in the first direction.

8. The cutting machine (10) according to any one of claims 1 to 7, wherein the cleaning chamber (20) includes an outlet (23) to which an exhaust device is connectable.

9. The cutting machine (10) according to claim 8, wherein
the cleaning chamber (20) further includes a first inlet (24) and a second inlet (26);
the cutting machine (10) further comprises:
a shutter (31) provided at the first inlet (24); and
a shutter opening/closing device (50) to open and close the shutter (31) and to change an opening area of the first inlet (24).

10. The cutting machine (10) according to any one of claims 1 to 9, further comprising:
an adaptor moving device (50) including a retainer (50A) to retain the adaptor (5), and a driver (50B) to move the retainer (50A) in a predetermined moving direction; wherein
the cleaning chamber (20) includes:
an opening that is open in the moving direction of the adaptor (5); and
a door (30) provided at the opening to be openable and closable by pivoting in the moving direction of the adaptor (5);
the adaptor moving device (50) is configured to drive the driver (50B) to cause the retainer (50A) to reciprocate between inside and outside of the cleaning chamber (20) through the opening and to transfer the adaptor (5) to and from the conveyor (15); and
the door (30) is configured to be opened when being pushed in the moving direction by the retainer (50A), and to be closed by self-weight.

11. The cutting machine (10) according to any one of claims 1 to 10, wherein
the cleaning chamber (20) includes:
a wall (21U, 21D, 21F, 21Rr, 21L, 21R) defining an internal space (21a) that accommodates the cleaning device (40);
an entrance (22) for the adaptor (5) that is open in the wall (21L);
an outlet (23) that is open in the wall (21D) to intersect with an opening direction of the entrance (22) and to which an exhaust device (M1a) is connected; and
an inlet (24) that is open in the wall (21U) to face the outlet (23) when seen in the opening direction of the entrance (22); and
the inlet (24) is closer to the entrance (22) than the cleaning device (40) in the opening direction of the entrance (22).

## Patentansprüche

1. Schneidmaschine (10), umfassend:
eine Bearbeitungskammer (11), die mit einer Schneidvorrichtung (12) ausgebildet ist, um ein von einem Adapter (5) gehaltenes Schneidobjekt (1) zu schneiden;
eine Reinigungskammer (20), die mit einer Reinigungsvorrichtung (40) zum Reinigen des Adapters (5) versehen ist;
einen Förderer (15) zum Transportieren des Adapters (5) zur Bearbeitungskammer (11) und zur Reinigungskammer (20);
eine Aufnahmekammer (13), die in der Lage ist, eine Vielzahl von Adaptern (5) aufzunehmen; und
eine Steuerung (100), die so konfiguriert oder programmiert ist, dass sie die Schneidvorrichtung (12), die Reinigungsvorrichtung (40) und den Förderer (15) steuert; wobei
die Schneidemaschine (10) eine Kastenform hat, um die Bearbeitungskammer (11), die Reinigungskammer (20), den Förderer (15) und die Aufnahmekammer (13) aufzunehmen,
die Steuerung (100) so konfiguriert oder programmiert ist, dass sie Folgendes umfasst:
eine Schneidsteuerung (110), die so konfiguriert oder programmiert ist, dass sie die Schneidvorrichtung (12) zum Schneiden des Schneidobjekts (1) steuert;
eine erste Transportsteuerung (121), die so konfiguriert oder programmiert ist, dass sie den Förderer (15) steuert, um den Adapter (5) in der Bearbeitungskammer (11) zur Reinigungskammer (20) zu befördern, nachdem das Schneiden des Schneidobjekts (1) beendet ist;
eine Reinigungssteuerung (130), die so konfiguriert oder programmiert ist, dass sie die Reinigungsvorrichtung (40) zum Reinigen des Adapters (5) in der Reinigungskammer (20) steuert; und
eine zweite Transportsteuerung (122), die so konfiguriert oder programmiert ist, dass sie den Förderer (15) steuert, um den Adapter (5) in der Reinigungskammer (20) zur Aufnahmekammer (13) zu befördern, nachdem die Reinigung des Adapters (5) abgeschlossen ist.

2. Schneidmaschine (10) gemäß Anspruch 1, wobei die Schneidsteuerung (110) so konfiguriert oder programmiert ist, dass sie das Schneiden eines anderen Schneidobjekts (1) während der Reinigung des Adapters (5) ermöglicht.

3. Schneidmaschine (10) gemäß Anspruch 1 oder 2, wobei die Reinigungsvorrichtung (40) eine erste Düse (41N) zum Einblasen von Druckluft in Richtung des Adapters (5) aufweist.

4. Schneidmaschine (10) gemäß Anspruch 3, wobei die Reinigungsvorrichtung (40) eine Düsenbewegungsvorrichtung umfasst, um die erste Düse (41N) zu bewegen.

5. Schneidmaschine (10) gemäß Anspruch 4, die ferner eine Adapterbewegungsvorrichtung (50) zum Ändern einer Position des Adapters (5) in der Reinigungskammer (20) aufweist.

6. Schneidmaschine (10) gemäß Anspruch 5, wobei die Adapterbewegungsvorrichtung (50) den Adapter (5) in einer Richtung bewegt, die sich mit einer Richtung schneidet, in der die Düsenbewegungsvorrichtung die erste Düse (41N) bewegt.

7. Schneidemaschine (10) gemäß einem der Ansprüche 3 bis 6, ferner umfassend:
eine Halterung (50A) zum Halten des Adapters (5); wobei
das Schneidobjekt (1) die Form einer Scheibe hat;
der Adapter (5) eine flache Plattenform hat, die eine erste Oberfläche und eine zweite Oberfläche aufweist, wobei die zweite Oberfläche eine Rückfläche der ersten Oberfläche ist;
der Halter (50A) den Adapter (5) so hält, dass die erste Oberfläche des Adapters (5) in eine erste Richtung weist und die zweite Oberfläche des Adapters (5) in eine zweite Richtung weist, wobei die zweite Richtung eine zur ersten Richtung entgegengesetzte Richtung ist;
die erste Düse (41N) vor dem von der Halterung (50A) in der ersten Richtung gehaltenen Adapter (5) positioniert ist, um Druckluft auf die erste Oberfläche des Adapters (5) aufzubringen;
die Reinigungsvorrichtung (40) ferner eine zweite Düse (42N) aufweist, die vor dem von der Halterung (50A) gehaltenen Adapter (5) in der zweiten Richtung angeordnet ist, um Druckluft auf die zweite Oberfläche des Adapters (5) aufzubringen; und
eine Position der ersten Düse (41N) und eine Position der zweiten Düse (42N) in der ersten Richtung gesehen voneinander beabstandet sind.

8. Schneidmaschine (10) gemäß einem der Ansprüche 1 bis 7, wobei die Reinigungskammer (20) einen Auslass (23) aufweist, an den eine Absaugvorrichtung anschließbar ist.

9. Schneidmaschine (10) gemäß Anspruch 8, wobei
die Reinigungskammer (20) ferner einen ersten Einlass (24) und einen zweiten Einlass (26) aufweist;
die Schneidemaschine (10) ferner umfasst:
einen Verschluss (31), der an dem ersten Einlass (24) vorgesehen ist; und
eine Verschluss-Öffnungs-/Schließvorrichtung (50), um den Verschlusses (31) zu öffnen und zu schließen, und um einen Öffnungsbereich des ersten Einlasses (24) zu ändern.

10. Schneidemaschine (10) gemäß einem der Ansprüche 1 bis 9, ferner umfassend:
eine Adapterbewegungsvorrichtung (50), die einen Halter (50A) zum Halten des Adapters (5) und einen Antrieb (50B) zum Bewegen des Halters (50A) in einer vorbestimmten Bewegungsrichtung aufweist; wobei
die Reinigungskammer (20) umfasst:
eine Öffnung, die in der Bewegungsrichtung des Adapters (5) offen ist; und
eine Tür (30), die an der Öffnung vorgesehen ist, um durch Schwenken in der Bewegungsrichtung des Adapters (5) geöffnet und geschlossen zu werden;
wobei die Adapterbewegungsvorrichtung (50) so konfiguriert ist, dass sie den Antrieb (50B) antreibt, um zu bewirken, dass sich der Halter (50A) zwischen dem Inneren und dem Äußeren der Reinigungskammer (20) durch die Öffnung hin- und herbewegt, und um den Adapter (5) zu und von dem Förderer (15) zu transportieren; und
wobei die Tür (30) so konfiguriert ist, dass sie geöffnet wird, wenn sie durch den Halter (50A) in die Bewegungsrichtung geschoben wird, und durch Eigengewicht geschlossen wird.

11. Schneidmaschine (10) gemäß einem der Ansprüche 1 bis 10, wobei
die Reinigungskammer (20) umfasst:
eine Wand (21U, 21D, 21F, 21Rr, 21L, 21R), die einen Innenraum (21a) definiert, der die Reinigungsvorrichtung (40) aufnimmt;
einen Eingang (22) für den Adapter (5), der in der Wand (21L) offen ist;
einen Auslass (23), der in der Wand (21D) offen ist, um sich mit einer Öffnungsrichtung des Eingangs (22) zu kreuzen, und an den eine Absaugvorrichtung (M1a) angeschlossen ist; und
einen Einlass (24), der in der Wand (21U) offen ist, um dem Auslass (23) in der Öffnungsrichtung des Eingangs (22) zugewandt zu sein; und
der Einlass (24) in Öffnungsrichtung des Eingangs (22) näher am Eingang (22) liegt als die Reinigungsvorrichtung (40).

## Revendications

1. Machine de coupe (10) comprenant :
une chambre de traitement (11) pourvue d'un dispositif de coupe (12) pour découper un objet de coupe (1) retenu par un adaptateur (5) ;
une chambre de nettoyage (20) pourvue d'un dispositif de nettoyage (40) pour nettoyer l'adaptateur (5) ;
un convoyeur (15) pour convoyer l'adaptateur (5) jusqu'à la chambre de traitement (11) et à la chambre de nettoyage (20) ;
une chambre de logement (13) capable de loger une pluralité d'adaptateurs (5) ; et
un contrôleur (100) configuré ou programmé pour contrôler le dispositif de coupe (12), le dispositif de nettoyage (40) et le convoyeur (15) ; dans laquelle
la machine de coupe (10) présente une forme de boîte pour loger la chambre de traitement (11), la chambre de nettoyage (20), le convoyeur (15) et la chambre de logement (13),
le contrôleur (100) est configuré ou programmé pour inclure :
un contrôleur de coupe (110) configuré ou programmé pour contrôler le dispositif de coupe (12) afin de découper l'objet de coupe (1) ;
un premier contrôleur de convoyage (121) configuré ou programmé pour contrôler le convoyeur (15) afin de convoyer l'adaptateur (5) dans la chambre de traitement (11) jusqu'à la chambre de nettoyage (20) après que la découpe de l'objet de coupe (1) est terminée ;
un contrôleur de nettoyage (130) configuré ou programmé pour contrôler le dispositif de nettoyage (40) afin de nettoyer l'adaptateur (5) dans la chambre de nettoyage (20) ; et
un deuxième contrôleur de convoyage (122) configuré ou programmé pour contrôler le convoyeur (15) afin de convoyer l'adaptateur (5) qui se trouve dans la chambre de nettoyage (20) jusqu'à la chambre de logement (13) après que le nettoyage de l'adaptateur (5) est terminé.

2. Machine de coupe (10) selon la revendication 1, dans laquelle le contrôleur de coupe (110) est configuré ou programmé pour permettre la découpe d'un autre objet de coupe (1) pendant le nettoyage de l'adaptateur (5).

3. Machine de coupe (10) selon la revendication 1 ou 2, dans laquelle le dispositif de nettoyage (40) comprend une première buse (41N) pour injecter de l'air comprimé vers l'adaptateur (5).

4. Machine de coupe (10) selon la revendication 3, dans laquelle le dispositif de nettoyage (40) comprend un dispositif de déplacement de buse pour déplacer la première buse (41N).

5. Machine de coupe (10) selon la revendication 4, comprenant en outre un dispositif de déplacement d'adaptateur (50) pour changer la position de l'adaptateur (5) dans la chambre de nettoyage (20).

6. Machine de coupe (10) selon la revendication 5, dans laquelle le dispositif de déplacement d'adaptateur (50) déplace l'adaptateur (5) dans une direction qui intersecte la direction dans laquelle le dispositif de déplacement de buse déplace la première buse (41N).

7. Machine de coupe (10) selon l'une quelconque des revendications 3 à 6, comprenant en outre :
un dispositif de retenue (50A) pour retenir l'adaptateur (5) ; dans laquelle
l'objet de coupe (1) présente une forme de disque ;
l'adaptateur (5) présente une forme de plaque plane comprenant une première surface et une deuxième surface, la deuxième surface étant une surface arrière de la première surface ;
le dispositif de retenue (50A) retient l'adaptateur (5) de telle sorte que la première surface de l'adaptateur (5) soit tournée dans une première direction et que la deuxième surface de l'adaptateur (5) soit tournée dans une deuxième direction, la deuxième direction étant une direction opposée à la première direction ;
la première buse (41N) est positionnée en avant de l'adaptateur (5) retenu par le dispositif de retenue (50A) dans la première direction pour injecter de l'air comprimé sur la première surface de l'adaptateur (5) ;
le dispositif de nettoyage (40) comprend en outre une deuxième buse (42N) positionnée en avant de l'adaptateur (5) retenue par le dispositif de retenue (50A) dans la deuxième direction pour injecter de l'air comprimé sur la deuxième surface de l'adaptateur (5) ; et
une position de la première buse (41N) et une position de la deuxième buse (42N) sont espacées l'une de l'autre vu dans la première direction.

8. Machine de coupe (10) selon l'une quelconque des revendications 1 à 7, dans laquelle la chambre de nettoyage (20) comprend une sortie (23) à laquelle peut être connecté un dispositif d'évacuation.

9. Machine de coupe (10) selon la revendication 8, dans laquelle
la chambre de nettoyage (20) comprend en outre une première arrivée (24) et une deuxième arrivée (26) ;
la machine de coupe (10) comprend en outre :
un obturateur (31) pourvu au niveau de la première arrivée (24) ; et
un dispositif d'ouverture/fermeture d'obturateur (50) pour ouvrir et fermer l'obturateur (31) et pour changer une zone d'ouverture de la première arrivée (24).

10. Machine de coupe (10) selon l'une quelconque des revendications 1 à 9, comprenant en outre :
un dispositif de déplacement d'adaptateur (50) comprenant un dispositif de retenue (50A) pour retenir l'adaptateur (5) et un dispositif d'entraînement (50B) pour déplacer l'élément de retenue (50A) dans une direction de déplacement prédéterminée ; dans laquelle
la chambre de nettoyage (20) comprend :
une ouverture ouverte dans la direction de déplacement de l'adaptateur (5) ; et
une porte (30) pourvue à l'ouverture pour pouvoir être ouverte et fermée en pivotant dans la direction de déplacement de l'adaptateur (5) ;
le dispositif de déplacement d'adaptateur (50) est configuré pour entraîner le dispositif d'entraînement (50B) pour commander un mouvement de va-et-vient du dispositif de retenue (50A) entre l'intérieur et l'extérieur de la chambre de nettoyage (20) à travers l'ouverture et pour transférer l'adaptateur (5) vers et depuis le convoyeur (15) ; et
la porte (30) est configurée pour être ouverte lorsqu'elle est poussée dans la direction de déplacement par le dispositif de retenue (50A) et pour être fermée par son propre poids.

11. Machine de coupe (10) selon l'une quelconque des revendications 1 à 10, dans laquelle
la chambre de nettoyage (20) comprend :
une paroi (21U, 21D, 21F, 21Rr, 21L, 21R) définissant un espace interne (21a) qui loge le dispositif de nettoyage (40) ;
une entrée (22) pour l'adaptateur (5) qui est ouverte dans la paroi (21L) ;
une sortie (23) qui est ouverte dans la paroi (21D) pour intersecter une direction d'ouverture de l'entrée (22) et à laquelle un dispositif d'évacuation (M1a) est connecté ; et
une arrivée (24) qui est ouverte dans la paroi (21U) pour faire face à la sortie (23) vu selon la direction d'ouverture de l'entrée (22) ; et
l'arrivée (24) est plus proche de l'entrée (22) que du dispositif de nettoyage (40) dans la direction d'ouverture de l'entrée (22).
